# EUROPÄISCHE PATENTSCHRIFT

(11) **EP 2 811 935 B1**
(45) Veröffentlichungstag und Bekanntmachung des Hinweises auf die Patenterteilung: **04.04.2018**
(21) Anmeldenummer: 13705946.5
(22) Anmeldetag: 06.02.2013
(51) Int. Cl.: A61C 8/00, A61C 13/265

(54) **VORRICHTUNGEN ZUR VERBINDUNG EINER DENTALEN PROTHESENKONSTRUKTION MIT EINEM KIEFERKNOCHEN**
DEVICES FOR CONNECTING A DENTAL PROSTHETICS WITH A JAWBONE
DISPOSITIFS DE LIAISON D'UNE CONSTRUCTION PROTHÉTIQUE DENTAIRE AVEC UN OS DE LA MÂCHOIRE

(30) Priorität: 07.02.2012 EP 12154311; 21.09.2012 EP 12185561
(43) Veröffentlichungstag der Anmeldung: 17.12.2014
(73) Patentinhaber: Valoc AG, 4313 Möhlin (CH)
(72) Erfinder: Fischler, Titus, 4314 Zeiningen (CH)
(74) Vertreter: Latscha Schöllhorn Partner AG
(86) Internationale Anmeldenummer: PCT/EP2013/052358
(87) Internationale Veröffentlichungsnummer: WO 2013/117608

(56) Entgegenhaltungen:
- EP-A1- 0 891 750
- EP-A1- 2 266 498
- DE-U1- 9 202 656
- US-A- 5 480 304
- US-A1- 2004 005 530
- US-A1- 2005 019 730
- US-A1- 2010 055 645

## Beschreibung

### Technisches Gebiet

Die Erfindung betrifft eine Patrize gemäss dem Oberbegriff des unabhängigen Anspruchs 1 sowie ein Abutment mit einer solchen Patrize, einen Retentionseinsatz zum Aufschnappen auf eine solche Patrize und eine entsprechende Verbindungseinrichtung.

Eine solche Patrize, die mit einer Befestigungsstruktur ausgebildet ist, über die die Patrize an einem Kieferknochen, an einem im Kieferknochen eingepflanzten Implantat, an einem Zahnstumpf oder an einem Nachbarzahn befestigbar ist, und die einen Körperabschnitt mit einer im Wesentlichen einer Mantelfläche eines Zylinders entsprechenden Aussenfläche, wobei die Mittelachse des Zylinders eine Längsachse der Patrize definiert, einen in Bezug auf die Längsachse der Patrize zum Körperabschnitt axial versetzten Einschnappabschnitt, der eine konvex gekrümmte Aussenfläche umfasst, die die Aussenfläche des Körperabschnitts von der Längsachse der Patrize aus nach aussen überragt, und ein die Patrize in Bezug auf seine Längsachse axial abschliessendes Kopfende, wobei der Einschnappabschnitt näher beim Kopfende angeordnet ist als der Körperabschnitt, umfasst, kann zur reversibel lösbaren Verbindung einer dentalen Prothesenkonstruktion mit einem Kieferknochen eingesetzt werden.

### Stand der Technik

In der Zahnmedizin werden heute regelmässig beschädigte beziehungsweise kranke Zähne durch einen künstlichen Zahnersatz ersetzt. Dabei werden häufig Implantate als Zahnwurzelersatz in einen Kieferknochen eines Patienten eingepflanzt, wobei in gewissen Ausführungen ein Abutment auf das Implantat aufgesetzt wird. Das Implantat beziehungsweise das Abutment ist dabei an seinem dem Kieferknochen abgewandten Längsende also seinem okklusalen Ende mit einer Verbindungsstruktur ausgestaltet, an der eine Prothesenkonstruktion lösbar montiert werden kann.

In einer verbreiteten Ausführung ist diese Verbindung zwischen Abutment und Prothesenstruktur als Druckknopfverbindung ausgestaltet, wobei typischerweise ein männliches Teil der Druckknopfverbindung also die Patrize am Abutment beziehungsweise Implantat ausgestaltet ist und ein weibliches Teil der Druckknopfverbindung also die Matrize mit der Prothesenkonstruktion verbunden ist. Mit solchen Druckknopfsystemen kann die Prothesenkonstruktion bequem auf die zugehörigen Implantate beziehungsweise Abutments aufgeschnappt und auch wieder entfernt beziehungsweise gelöst werden.

In der WO 2010/025034 A1 ist beispielsweise eine dentale Verankerungsvorrichtung beschrieben, die einen am Abutment oder direkt am Implantat ausgestalteten Patrizenkopf umfasst sowie ein Matrizengehäuse, das mit der Prothesenkonstruktion fest verbunden wird. Die Matrize umfasst weiter einen Retentionseinsatz, der in das Matrizengehäuse eingesetzt wird, bevor die Matrize zusammen mit der Prothesenkonstruktion auf den Patrizenkopf aufgeschnappt wird. Der Patrizenkopf weist ein flaches Kopfende und eine konvex nach aussen gekrümmte Aussenfläche als Einschnappfläche auf. Im flachen Kopfende ist eine Öffnung mit einem Innenprofil in den Patrizenkopf eingelassen, durch die einerseits ein Schraubwerkzeug zum Schrauben des Abutments beziehungsweise des Implantats angreifen kann und andererseits ein Stempel beziehungsweise Stopfen des Retentionseinsatzes klemmen kann. Die US 2004/005530 A1 zeigt eine ähnliche Verankerungsvorrichtung, bei dem ein Patrizenkopf ein flaches Kopfende und zwei axial beabstandete, konvex nach aussen gekrümmte Aussenflächen als Einschnappflächen aufweist. Ein Retentionseinsatz einer zugehörigen Matrize ist mit einer passenden Innenkontur ausgebildet. Im Vergleich zur einfachen Einschnappfläche der WO 2010/025034 A1 ermöglichen es die doppelten Einschnappflächen der US 2004/005530 A1, mit einem verhältnismässig kleinen Durchmesser eine verhältnismässig starke Verbindung zwischen Matrize und Patrize zu erreichen.

Ein weiteres anderes Druckknopfverbindungssystem ist in der WO 2011/027229 A2 beschrieben. Dabei ist insbesondere die Matrize unter anderem so weitergebildet, dass der Retentionseinsatz über einen Verriegelungsmechanismus fest mit dem Matrizengehäuse verbunden ist, wenn die Matrize auf die Patrize aufgeschnappt ist.

Da die Retentionseinsätze bei diesen Druckknopfsystemen nur innerhalb eines beschränkten Winkelbereichs auf der Patrize kippbar sind, kann ein Nachteil darin bestehen, dass auf die Patrize aufgeschnappte Prothesenkonstruktion entsprechend nur in einem zu eingeschränkten Umfang auf der Patrize kippbar sind. Häufig wird jedoch in Anwendung von Druckknopfsystemen eine verbesserte Kippbarkeit der Prothesenkonstruktion angestrebt.

Diesbezüglich verbesserte Eigenschaften bieten typischerweise Druckknopfsysteme mit kugelförmigen Patrizen. Beispielsweise beschreibt die US 5,211,561 A ein solches Druckknopfsystem, das eine Patrize mit einem kugelförmigen Kopf aufweist. Solche kugelförmigen Patrizen können jedoch beim festen Verbinden der Matrize beziehungsweise des Matrizengehäuses mit der Prothesenkonstruktion erhebliche Schwierigkeiten bereiten.

Bei diesem Prozess werden typischerweise erst Retentionseinsätze mit einem zugehörigen Matrizengehäuse zusammen auf die Patrizen von eingebauten Implantaten beziehungsweise Abutments aufgesetzt. Danach wird die Prothesenkonstruktion so auf die Matrizengehäuse aufgesetzt, dass jedes Gehäuse in einer Aussparung der Prothesenkonstruktion liegt, wo es dann beispielsweise durch Auspolymerisierung der Aussparung fest mit der Prothesenkonstruktion verbunden wird.

Durch die verhältnismässig gute beziehungsweise leichte Kippbarkeit der Retentionseinsätze und der Matrizengehäuse auf der Patrize beziehungsweise durch die verhältnismässig instabile Anordnung der Retentionseinsätze und der Matrizengehäuse auf den kugelförmigen Patrizen, ist es jedoch schwierig während dem Verbinden der Matrizengehäuse mit der Prothesenkonstruktion sicher zu stellen, dass die Retentionseinsätze und die Matrizengehäuse alle genau gerade axial auf der Patrize angeordnet sind. Häufig kann dies nicht ausreichend gewährleistet werden, was dazu führen kann, dass die Matrizengehäuse in Bezug auf die Patrizen leicht verkippt beziehungsweise geneigt mit der Prothesenkonstruktion verbunden werden, wodurch sich die Prothesenkonstruktion dann nicht mehr optimal aufschnappen lässt und/oder nicht mehr optimalen Bewegungsspielraum auf den Implantaten aufweist.

Aufgabe der nachfolgenden Erfindung ist es daher, eine Konstruktion vorzuschlagen, die einerseits eine verhältnismässig gute Kippbarkeit der Matrize(n) einer Prothesenkonstruktion ermöglicht und andererseits auf verhältnismässig einfache effiziente Weise eine verhältnismässig genaue Positionierung der Matrize(n) auf entsprechenden Patrizen und somit eine exakte bestimmungsgemässe Herstellung der Prothesenkonstruktion ermöglicht.

### Darstellung der Erfindung

Diese Aufgabe wird erfindungsgemäss durch eine Patrize gelöst, wie sie im unabhängigen Anspruch 1 definiert ist. Vorteilhafte Ausführungsvarianten der Erfindung ergeben sich aus den abhängigen Ansprüchen.

Das Wesen der Erfindung besteht im Folgenden: Eine Patrize zur reversibel lösbaren Verbindung einer dentalen Prothesenkonstruktion mit einem Kieferknochen, die mit einer Befestigungsstruktur ausgebildet ist, über die die Patrize am Kieferknochen, an einem im Kieferknochen eingepflanzten Implantat, an einem Zahnstumpf oder an einem Nachbarzahn befestigbar ist, umfasst einen Körperabschnitt mit einer einer Mantelfläche eines Zylinders entsprechenden Aussenfläche, wobei die Mittelachse des Zylinders beziehungsweise des Körperabschnitts eine Längsachse der Patrize definiert. Die Patrize umfasst auch einen in Bezug auf die Längsachse der Patrize zum Körperabschnitt axial versetzten Einschnappabschnitt, der eine entlang der Längsachse konvex gekrümmte Aussenfläche umfasst, die die Aussenfläche des Körperabschnitts von der Längsachse der Patrize aus nach aussen beziehungsweise distal überragt. Weiter umfasst die Patrize ein die Patrize in Bezug auf seine Längsachse axial abschliessendes Kopfende. Bei der erfindungsgemässen Patrize ist der Einschnappabschnitt näher beim Kopfende angeordnet als der Körperabschnitt und zwischen der konvex gekrümmten Aussenfläche des Einschnappabschnitts und dem Kopfende ist ein konkaver Zwischenabschnitt angeordnet.

Unter dem Begriff "Patrize" im Sinne der Erfindung kann eine Vorrichtung verstanden werden, die im Betrieb am Kieferknochen befestigt wird und auf der eine mit einer Prothesenkonstruktion fest verbundene Matrize montiert und demontiert werden kann. Dazu kann die Patrize ein männliches Teil einer druckknopfähnlichen Verbindungsstruktur bereit zu stellen. Beispielsweise kann die Patrize als einteiliges Implantat mit einer ein Aussengewinde aufweisenden Befestigungsstruktur, über welches das Implantat in den Kieferknochen eingeschraubt und eingepflanzt werden kann, als Abutment mit einer passend zu einer entsprechenden Struktur des Implantats ausgestalteten Befestigungsstruktur zur Montage auf einem Implantat, als Abutmentabdeckung zum Aufsetzen auf ein Abutment, als Brückenkonstruktion, als Zahnwurzelstift oder als eine Zahnstumpfkappe ausgestaltet sein. Die Patrize kann auch Teil einer der vorgenannten Vorrichtungen oder einer ähnlichen Vorrichtung sein. Unter dem Begriff "reversibel lösbares Verbinden" kann im Zusammenhang mit der Patrize eine Verbindung zur Montage beziehungsweise zum Einsetzen einer Prothesenkonstruktion im Mundraum eines Patienten verstanden werden. Dabei soll das Verbinden insofern reversibel also wiederholt lösbar sein, dass die Prothesenkonstruktion eingesetzt und wieder entfernt werden kann. Insbesondere kann dies mittels einer Druckknopfverbindung realisiert sein, bei der die Prothesenkonstruktion zum Einsetzen auf die Patrize aufgeschnappt und zum Entfernen wieder davon abgezogen wird.

Im Zusammenhang mit der Erfindung können unter dem Begriff "konvex" in Bezug auf die Patrize beziehungsweise benannter Teile derselben nach aussen gekrümmte, nach aussen geknickte, nach aussen gewölbte, nach aussen gestülpte oder ähnliche Ausgestaltungen verstanden werden. Unter dem Begriff "entlang der Längsachse konvex gekrümmt" bezieht sich in Bezug auf die Aussenfläche des Einschnappabschnitts auf eine Krümmung in Richtung der Längsachse, das heisst auf eine Krümmung in einer die Längsachse umfassenden Schnittebene. Analog dazu können im gleichen Zusammenhang unter dem Begriff "konkav" in Bezug auf die Patrize beziehungsweise benannter Teile derselben nach innen gekrümmte, nach innen geknickte, nach innen gewölbte, nach innen gestülpte oder ähnliche Ausgestaltungen verstanden werden.

In einigen Ausführungsformen kann die Aussenfläche des Einschnappabschnitts vollständig entlang der Längsachse konvex gekrümmt sein. In anderen Ausführungsformen kann die Aussenfläche des Einschnappabschnitts mehrere entlang der Längsachse konvex gekrümmte Bereiche aufweisen, die über nicht gekrümmte oder konvex gekrümmte Bereiche miteinander verbunden sind. Beispielsweise kann der Einschnappabschnitt zwei axial voneinander beabstandete, entlang der Längsachse konvex gekrümmte Bereiche aufweisen, die über einen entlang der Längsachse konkav gekrümmten Bereich miteinander verbunden sind. Unter dem Einschnappabschnitt kann der Abschnitt der Patrize verstanden werden, der alle Bereiche der Patrize umfasst, über den eine Matrize an der Patrize gehalten werden kann.

Der Zwischenabschnitt der erfindungsgemässen Patrize kann insbesondere so zwischen Einschnappabschnitt und Kopfende angeordnet sein, dass zwischen Zwischenabschnitt und Kopfende kein Bereich mehr ausgestaltet ist, über den eine Patrize beziehungsweise die Prothesenkonstruktion gehalten beziehungsweise aufgeschnappt werden kann, insbesondere auch kein weiterer Einschnappabschnitt. Bevorzugt geht der Zwischenabschnitt direkt in das Kopfende über. Er kann auch direkt in den Einschnappabschnitt übergehen.

Unter dem Begriff "Prothesenkonstruktion" werden im Zusammenhang mit der Erfindung verschiedene je nach Einsatz geeignete Konstruktionen verstanden, wie sie beispielsweise als Einzel-, Teil- oder Ganzzahnersatz, Brücke, Krone, Hybrid- oder Vollprothese bekannt sind.

Die Patrize und insbesondere ihr Kopfende, ihr Einschnappabschnitt und ihr Zwischenabschnitt können auch im Wesentlichen rotationssymmetrisch ausgestaltet sein. Sie kann je nach Ausgestaltung und Einsatzgebiet aus entsprechend geeigneten Materialien hergestellt sein, wobei beispielsweise Titan, Zirkonoxid, Polyaryletherketone (PAEK), Polyetheretherketon (PEEK), Polyetherketonketon (PEKK) oder für medizinische Applikationen optimierte Abwandlungen davon eingesetzt werden kann. Typischerweise kann eine solche Patrize den Zweck erfüllen, auf einer Seite einen passgenauen Anschluss an den Kieferknochen des Patienten zu gewährleisten und auf der anderen Seite Mittel bereit zu stellen, an denen die Prothesenkonstruktion sicher befestigt werden kann. Der Einschnappabschnitt der erfindungsgemässen Patrize ermöglicht dabei, eine lösbare Druckknopfverbindung zwischen der Patrize und der Prothesenkonstruktion bereitzustellen.

In Anwendung der erfindungsgemässen Patrize kann bei der Herstellung einer Prothesenkonstruktion die Patrize beziehungsweise mehrere solche Patrizen mit einem Kieferknochen verbunden werden. Dies kann je nach Ausgestaltung der Patrize über eine direkte Verbindung mit dem Kieferknochen oder über eine indirekte Verbindung mit dem Kieferknochen beispielsweise als Abutment über ein Implantat, als Abutmentabdeckung über ein Abutment und ein Implantat oder über einen Zahnstumpf erfolgen.

Parallel dazu kann die Prothesenkonstruktion so vorbereitet sein, dass Öffnungen beziehungsweise Sacklöcher beziehungsweise Aussparungen an der oder den Stellen der Prothesenkonstruktion vorgesehen sind, an denen die Prothesenkonstruktion mittels einer oder mehrerer Matrizen mit der oder den Patrize(n) verbindbar sein soll. Auf die Patrizen können dann Retentionseinsätze und passende Matrizengehäuse aufgesetzt werden. Dabei ermöglicht die erfindungsgemässe Geometrie der Patrizen insbesondere mit ihren konkaven Zwischenabschnitten, dass die Retentionseinsätze in vorbestimmter Ausrichtung ausreichend auf den Patrizen gehalten werden können und dass ein unbeabsichtigtes Verkippen der Retentionseinsätze auf den Patrizen vermieden werden kann. Die erfindungsgemässe Patrize kann durch die Ausgestaltung seines Kopfs eine Eigenzentrierfunktion auf die Matrize beziehungsweise deren Retentionseinsatz ausüben. Insbesondere kann durch die Form des Kopfs der Patrize der Retentionseinsatz bei einer Verkippung leicht vorgespannt werden, so dass er automatisch wieder in die erwähnte bevorzugte vorbestimmte Ausrichtung beziehungsweise Position bewegt wird, sobald er den notwendigen Freiraum dazu erhält. In dieser bevorzugten vorbestimmten Ausrichtung beziehungsweise Position können die Patrizen dann in den Öffnungen der Prothesenkonstruktion angeordnet werden und die Matrizengehäuse können beispielsweise über Auspolymerisierung der Öffnungen fest mit der Prothesenkonstruktion verbunden werden.

Im täglichen Gebrauch der erfindungsgemässen Patrize beziehungsweise der damit verbindbaren Prothesenkonstruktion kann - wie unten in einer bevorzugten Ausführung detaillierter beschrieben - das Kopfende der Patrize so ausgestaltet sein, dass es zusammen mit dem Einschnappabschnitt ein verhältnismässig starkes Kippen der Matrize auf der Patrize ermöglicht, was in verschiedener Hinsicht erstrebenswert beziehungsweise komfortabel sein kann. Auch ermöglicht die Form seines Kopfendes, dass beim Aufsetzen die an der Prothesenkonstruktion montierte Matrize einfach und auf verhältnismässig sanfte Weise genau positioniert werden kann, so dass ein komfortables Einsetzen der Prothesenkonstruktion möglich ist und beispielsweise durch Ecken oder Kanten des Kopfendes verursachte Beschädigungen an der Matrize vermieden werden können.

Auch ermöglicht die erfindungsgemässe Ausgestaltung der Patrize, dass das Kopfende verhältnismässig weit axial beabstandet von der dem Körperabschnitt entgegengesetzten Seite des Einschnappabschnitts angeordnet ist. Dadurch kann das Kopfende der Patrize im Vergleich zu seinem Einschnappabschnitt erhöht liegen, das heisst es erstreckt sich weiter in den Mundinnenraum hinein als der Einschnappabschnitt. Auf diese Weise kann sich das Kopfende im Vergleich zum Einschnappabschnitt weiter vom Zahnfleisch abheben, so dass sich die Patrize vor einem Einsetzen der Prothesenkonstruktion verhältnismässig leicht und eindeutig lokalisieren lässt. Wie auch weiter unten in bevorzugter Ausführung detaillierter gezeigt, kann durch eine gleichzeitig angepasste Ausgestaltung anderer Bestandteile der Suprastruktur insbesondere des Retentionseinsatzes verhindert werden, dass die Suprastruktur unzweckmässig hoch ist.

Die Geometrie der erfindungsgemässen Patrize ermöglicht also, dass die Matrize zum einen in einer Ausgangsstellung beziehungsweise in einer vorbestimmten Ausrichtung und Position leicht gehalten beziehungsweise zentriert werden kann, so dass die Prothesenkonstruktion auf verhältnismässig einfache Weise präzise und bestimmungsgemäss mit der Matrize versehen werden kann. Zum anderen ermöglicht die Patrize auch, dass die Prothesenkonstruktion verhältnismässig stark verkippt werden kann, ohne dass die Patrize aus der Matrize ausklickt, was insbesondere bei über zwei Patrizen am Kieferknochen befestigten Prothesenkonstruktionen von Bedeutung sein kann. Zudem kann die Prothesenkonstruktion mittels der erfindungsgemässen Patrize auch verhältnismässig leicht und effizient im Mund eines Patienten eingesetzt werden.

Vorzugsweise weist der Zwischenabschnitt der erfindungsgemässen Patrize eine konkav gekrümmte Aussenfläche auf. Eine solche Ausgestaltung der Patrize ermöglicht eine bevorzugte ausreichend leichte Halterung der Matrize in einer vorbestimmten Ausrichtung beziehungsweise Position. Zudem ermöglicht diese so gekrümmte Aussenfläche ein sanftes komfortables Zentrieren und Aufsetzen einer Matrize.

Das Kopfende der Patrize ist vollständig konvex gekrümmt und geschlossen ausgestaltet. In diesem Zusammenhang bezieht sich der Begriff "geschlossen" darauf, dass die Oberfläche des Kopfendes keine Öffnungen aufweist, die nicht durch Eigenschaften des verwendeten Materials wie beispielsweise durch die Porosität bedingt sind. Insbesondere wird darunter verstanden, dass das Kopfende keine Öffnung zum Einbringen eines Werkzeugs oder eines Retentionsstopfens oder zu einem ähnlichen Zweck aufweist. Eine solche Ausgestaltung des Kopfendes ermöglicht, dass das Aufsetzen einer passenden Matrize und insbesondere deren Retentionseinsatzes verhältnismässig einfach verläuft. Insbesondere kann über die Krümmung des Kopfendes die Matrize präzise eingemittet und positioniert werden, indem die Matrize entlang der Krümmung gleitet bis sie zentriert auf der Patrize beziehungsweise auf dem Einschnappabschnitt des Abutments liegt, so dass ein komfortables Aufdrücken und Aufschnappen der Matrize auf den Einschnappabschnitt der Patrize möglich ist. Dabei kann über die gekrümmte Ausgestaltung des Kopfendes auch eine Beschädigung der Matrize vermieden werden. Zudem ermöglicht eine solche geschlossene Ausgestaltung des Kopfendes eine Verbesserung der Hygiene, da kein Einschluss von Speiseresten oder anderen Verunreinigung in Öffnungen möglich ist.

Das Kopfende des Abutments entspricht dabei vorzugsweise im Wesentlichen einem Segment einer Kugelfläche. Damit kann das Kopfende auf verhältnismässig einfache Weise bevorzugt konvex gekrümmt ausgestaltet sein.

Das Segment der Kugelfläche des Kopfendes weist dabei vorzugsweise einen ersten Krümmungsradius auf und die konvex gekrümmten Aussenfläche des Einschnappabschnitts einen zweiten Krümmungsradius, wobei der erste Krümmungsradius grösser ist als der zweite Krümmungsradius. Eine solche Ausgestaltung der Patrize ermöglicht einerseits ein effizientes zweckmässiges Einschnappen einer Matrize am Einschnappabschnitt, so dass die Matrize ausreichend an der Patrize gehalten werden kann. Andererseits ermöglicht die weichere Rundung des Kopfendes, dass die Matrize verhältnismässig stark auf der Patrize gekippt werden kann, ohne dass sie ausklickt. In einer bevorzugten Ausführung ist dabei der erste Krümmungsradius etwa zwei bis etwa vier Mal grösser als der zweite Krümmungsradius und insbesondere etwa drei Mal grösser. Der Begriff "etwa" im Zusammenhang mit den Grössenverhältnissen des ersten Krümmungsradius und des zweiten Krümmungsradius kann sich auf einen Wert beziehen, der innerhalb 20%, innerhalb 10%, innerhalb 5% oder innerhalb 2% des gegebenen Werts liegt. Zudem kann sich der Begriff "etwa" insbesondere auch genau auf den angegebenen Wert beziehen.

Ein weiterer Aspekt der Erfindung bezieht sich auf ein Verbindungsstück zur Verbindung einer dentalen Prothesenkonstruktion mit einem Kieferknochen als eine Ausführung der erfindungsgemässen Patrize. Das Verbindungsstück umfasst eine Patrize wie oben beschrieben und eine Befestigungsstruktur, über die das Verbindungsstück am Kieferknochen oder an einem im Kieferknochen eingepflanzten Implantat befestigbar ist. Unter dem Begriff "Abutment" wird im Zusammenhang mit der vorliegenden Erfindung eine Verbindungskonstruktion beziehungsweise das Verbindungsstück beziehungsweise ein Pfosten verstanden, die beziehungsweise das beziehungsweise der Mittel aufweist, über die eine Prothesenkonstruktion befestigt werden kann, so dass bei bestimmungsgemäßem Einsatz des Abutments die Prothesenkonstruktion über das Abutment in einem Mund eines Patienten am Kieferknochen montiert werden kann. Solche Verbindungsstücke können als einteilige Konstruktion mit einem Implantatkörper versehen sein, über den es direkt mit einem Kieferknochen des Patienten verbunden werden kann. Beispielsweise kann dabei der Implantatkörper ein Außengewinde als Befestigungsstruktur aufweisen, über welches das Verbindungsstück in den Kieferknochen eingeschraubt und eingepflanzt werden kann. Alternativ dazu kann das Verbindungsstück auch als Abutment dazu ausgestaltet sein, an einem gesonderten Implantat befestigt zu werden, so dass Implantat und Abutment zweiteilig ausgestaltet sind. Dabei ist die Befestigungsstruktur des Abutments vorzugsweise passend zu einer entsprechenden Struktur des Implantats ausgestaltet, so dass es effizient damit verbunden werden kann. Die Befestigungsstruktur kann auf geeignete Weise auf bekannte Art ausgestaltet sein. Typischerweise kann ein solches Abutment den Zweck erfüllen, auf einer Seite einen passgenauen Anschluss an ein im Kieferknochen des Patienten eingepflanztes Implantat zu gewährleisten und auf der anderen Seite Mittel bereit zu stellen, an denen die Prothesenkonstruktion sicher befestigt werden kann.

Die Teile der gesamten Prothesen- und Implantateinrichtung, die in einem Einsatz die Gingiva beziehungsweise das Zahnfleisch zum Mundraum hin überragen und somit von außen sichtbar sind, können als "Suprastruktur" bezeichnet werden. Beispielsweise kann die Suprastruktur die Prothesenkonstruktion, eine eine Halteschale beziehungsweise ein Gehäuse und einen Retentionseinsatz umfassende Verbindungsvorrichtung (Matrize) sowie insbesondere bei der erwähnten zweiteiligen Ausführung des Verbindungsstücks das Abutment selbst oder zumindest Teile davon wie dessen Patrize umfassen.

In gewissen Ausführungsformen des Verbindungsstück kann der Körperabschnitt der Patrize auch gebogen beziehungsweise geknickt ausgestaltet sein. In einem solchen Fall entspricht seine Außenfläche im Wesentlichen einer Mantelfläche eines gebogenen beziehungsweise geknickten Zylinders, wobei die Mittelachse dieses gebogenen beziehungsweise geknickten Kreiszylinders an seinem dem Kopfende des Verbindungsstücks zugewandten Ende die Längsachse des Verbindungsstücks definiert.

Die erfindungsgemässe Ausgestaltung des Verbindungsstücks ermöglicht, dass die oben im Zusammenhang mit der Patrize erwähnten Effekte und Vorteile mit dem Verbindungsstück verwirklicht werden können.

Vorzugsweise weist die Befestigungsstruktur des Verbindungsstücks einen sich vom Kopfende der Patrize weg erstreckenden Schraubenabschnitt auf, an dem zumindest teilweise ein Aussengewinde ausgebildet ist. Eine solche Befestigungsstruktur ermöglicht, dass das Verbindungsstück zur Befestigung beispielsweise über ein korrespondierendes Innengewinde eines Implantats verschraubt werden kann. Auch kann die Befestigungsstruktur mit dem das Aussengewinde aufweisenden Schraubenabschnitt dazu ausgestaltet sein, direkt in einen Kieferknochen eingeschraubt zu werden. Zum Verschrauben kann beispielsweise ein dazu angepasstes Schraubwerkzeug verwendet werden. Ein solches Aussengewinde ermöglicht also eine einfache effiziente Befestigung des Verbindungsstücks.

Dabei umfasst die Befestigungsstruktur vorzugsweise einen zwischen dem Schraubenabschnitt und der Patrize angeordneten Schlüsselansetzabschnitt. Der Schlüsselansetzabschnitt kann als Zylinder ausgestaltet sein, dessen Mantelfläche einen im Wesentlichen als Vieleck ausgestalteten Querschnitt aufweist. Dadurch oder auf andere Weise kann der Schlüsselansetzabschnitt vorzugsweise zylindrisch ausgestaltet sein, wobei an der Mantelfläche vorzugsweise vier, fünf, sechs oder acht ebene Angreifflächen entlang des Umfangs der Mantelfläche angeordnet sind. Die beispielsweise im Wesentlichen rechteckigen Angreifflächen der Außenfläche des Schlüsselansetzabschnitts ermöglichen, dass das Verbindungsstück zum Ein- und Ausdrehen beziehungsweise - schrauben von außen her gegriffen werden kann. Insbesondere kann dies wie erwähnt durch ein spezifisch angepasstes Schraubwerkzeug erfolgen. Der erwähnte Querschnitt des Zylinders der Mantelfläche kann im Wesentlichen die Form eines Quadrats, eines Hexagons oder eines Oktagons aufweisen. Eine solche Ausgestaltung als Vierkant-, als Hexagon- oder Oktagonzylinder ermöglicht eine verhältnismässig einfache Anordnung, wobei gewährleistet werden kann, dass die Angreifflächen so ausgestaltet sind, dass zum Schrauben des Verbindungsstücks geeignete Kräfte über sie auf das Verbindungsstück übertragen werden können.

Das Verbindungsstück kann einen im Wesentlichen zylindrischen Gingivahöhenabschnitt umfassen, der die Patrize von einer Längsachse des Verbindungsstücks aus nach aussen überragt. Mit einem solchen Gingivahöhenabschnitt kann die Höhe des Verbindungsstücks so angepasst sein, dass die Patrize im Wesentlichen oberhalb der Gingiva liegt, so dass sie von einer Mundhöhle her zugänglich ist, wenn das Verbindungsstück mit dem Kieferknochen verbunden ist. Die Höhe des Gingivahöhenabschnitts kann in einem Bereich von etwa 0.5 mm bis etwa 8 mm, vorzugsweise in einem Bereich von etwa 1 mm bis 6 mm und insbesondere in einem Bereich von 1.5 mm bis 5.5 mm liegen.

Der Gingivahöhenabschnitt kann den Schraubenabschnitt der Befestigungsstruktur von der Längsachse des Verbindungsstücks aus nach aussen überragen, wobei ein Anschlag zwischen dem Gingivahöhenabschnitt und dem Schraubenabschnitt der Befestigungsstruktur ausgestaltet sein kann. Ein solcher Anschlag ermöglicht, dass das Verbindungsstück bündig an einem zugehörigen Implantat anliegt, wenn es damit verbunden ist. Beispielsweise kann damit eine verhältnismässig gleichmässige breitflächige Kraftübertragung vom Verbindungsstück auf das Implantat und in die Gegenrichtung erreicht werden. Dabei ist der Anschlag zwischen dem Körperabschnitt und dem Schraubenabschnitt der Befestigungsstruktur vorzugsweise als eine im Wesentlichen rechtwinklig zur Längsachse angeordnete im Wesentlichen ebene Fläche ausgestaltet.

Der Schraubenabschnitt der Befestigungsstruktur des Verbindungsstücks kann einen Zwischenabschnitt ohne Aussengewinde und einen Gewindeabschnitt mit Aussengewinde aufweisen. Dabei kann sich der Zwischenabschnitt des Schraubenabschnitts der Befestigungsstruktur vom Gingivahöhenabschnitt zum Gewindeabschnitt verjüngen. Der Zwischenabschnitt kann dabei mindestens eine Stufe aufweisen. Die Stufen, mit denen sich der Zwischenabschnitt auch verjüngt, können kantig, gekrümmt, parabolisch oder ähnlich ausgestaltet sein. Mit solchen Stufen in Längsrichtung des Verbindungsstücks können Kräfte, die entlang der Längsachse des Verbindungsstücks wirken, an mehreren Stellen beispielsweise auf ein zugehöriges Implantat übertragen werden. Damit kann beispielsweise bei einer Krafteinwirkung beziehungsweise einer Bissbewegung eine vorteilhafte Kraftverteilung auf das Verbindungsstück beziehungsweise das Abutment und/oder das Implantat erreicht werden. Zudem können solche Stufen auch beim Befestigen des Verbindungsstücks beispielsweise zur Kraftverteilung hilfreich sein.

Ein maximaler senkrecht zur Längsachse des Verbindungsstücks liegender Querschnitt des Einschnappabschnitts der Patrize kann einen Durchmesser von etwa 2.1 mm bis etwa 2.7 mm und insbesondere etwa 2.3 mm aufweisen. Ein so dimensionierter Einschnappabschnitt ermöglicht eine verhältnismässig kleine Druckknopfverbindung, was bei vielen Prothesenkonstruktionen beziehungsweise Anwendungen eine erhöhte Flexibilität und einen verbesserten Komfort ermöglichen kann. Zum Vergleich liegen entsprechende Durchmesser herkömmlicher Druckknopfverbindungen in einem Bereich von etwa 3.8 mm bis etwa 4 mm. Gemäss dieser Dimensionierung des Einschnappabschnitts des Verbindungsstücks kann der Durchmesser also um etwa 30 % bis etwa 40 % reduziert werden. Insbesondere zusammen mit einem erfindungsgemässen Retentionseinsatz können trotz der vorzugsweisen kleineren Dimensionierung des Einschnappabschnitts ausreichende Halte- beziehungsweise Abzugs- beziehungsweise Retentionskräfte gewährleistet werden. Zudem ermöglicht die bevorzugte konvex gekrümmte Ausgestaltung des Kopfendes des Verbindungsstücks ein einfaches sauberes Aufsetzen der Prothesenkonstruktion auf das Verbindungsstück auch bei verhältnismässig kleinen solchen Einschnappabschnitten.

Ein weiterer anderer Aspekt der Erfindung betrifft einen Retentionseinsatz zum Aufschnappen auf einen Einschnappabschnitt einer Patrize wie oben beschrieben. Der Retentionseinsatz weist eine Endseite und einen davon abstehenden zumindest teilweise ringförmigen Retentionsrand auf, wobei die Endseite und der davon abstehende Retentionsrand eine Fassung bilden, die einen korrespondierend zur Aussenfläche des Einschnappabschnitts der Patrize ausgestalteten konkaven ersten Bereich, einen zur Aufnahme des Kopfendes der Patrize ausgestalteten zweiten Bereich und einen zwischen dem ersten Bereich und dem zweiten Bereich ausgestalteten dritten Bereich umfasst. Im Zusammenhang mit dem Retentionseinsatz können unter dem Begriff "konkav" in Bezug auf den Körper des Retentionseinsatzes beziehungsweise benannter Teile desselben nach innen gekrümmte, nach innen geknickte, nach innen gewölbte, nach innen gestülpte oder ähnliche Ausgestaltungen verstanden werden.

Ein solcher Retentionseinsatz erlaubt einen universellen Einsatz mit einer erfindungsgemässen Patrize beziehungsweise mit einem erfindungsgemässen Verbindungsstück sowie mit einer bekannten Patrize mit einer Öffnung an seinem Kopfende beziehungsweise einem flachen oder ebenen Kopfende. Somit ist möglich, dass mit einer Art von Retentionseinsätzen parallel verschiedene Arten von Patrizen beziehungsweise Verbindungsstücke versorgt werden, was für den Praktiker eine Erleichterung sein kann. Insbesondere ermöglicht der dritte Bereich des Retentionseinsatzes ein Abstützen an beziehungsweise eine Auflage auf eine solche herkömmliche Patrize. Der zweite Bereich der Fassung des Retentionseinsatzes kann dabei leer bleiben.

Bei einem Einsatz des Retentionseinsatzes zusammen mit einer Patrize beziehungsweise einem Verbindungsstück wir oben beschrieben, ermöglichen der erste, zweite und dritte Bereich zudem, dass eine den Retentionseinsatz umfassende Matrize in einem bevorzugten Ausmass auf der Patrize gekippt werden kann, ohne dass die Matrize von der Patrize abgelöst wird. Gleichzeitig ermöglicht der Retentionseinsatz, dass er bei einer Verkippung auf der Matrize vorgespannt wird, so dass er von selbst wieder in seine unverkippte Ausgangsposition beziehungsweise -stellung bewegt wird, wenn keine äussere Kippkraft mehr auf ihn wirkt. Damit kann eine Eigenzentrierfunktion implementiert sein, die wie oben beschrieben eine Erleichterung bei der Herstellung einer Prothesenkonstruktion darstellen kann. Zum Vorspannen des Retentionseinsatzes kann dieser beispielsweise elastisch deformiert beziehungsweise gebogen werden.

Vorzugsweise ist der zweite Bereich der Fassung des Retentionseinsatzes als durchgehende Öffnung in der Endseite ausgestaltet. Die Öffnung kann dabei insbesondere einen runden beziehungsweise kreisförmigen Querschnitt aufweisen. Ein solcher zweiter Bereich ermöglicht eine verhältnismässig einfache effiziente Ausgestaltung des erfindungsgemässen Retentionseinsatzes.

Vorzugsweise weist der dritte Bereich der Fassung eine konische Innenfläche aufweist, die sich vom ersten Bereich der Fassung zum zweiten Bereich der Fassung hin verjüngt. Ein solcher dritter Bereich erlaubt eine effiziente Herstellung des Rententionseinsatzes und ermöglicht die angestrebte vorteilhafte Wirkung insbesondere auch bezüglich Vorspannbarkeit.

Vorzugsweise weist der Retentionsrand einen Verlängerungsbereich auf, der entgegen dem dritten Bereich der Fassung an den ersten Bereich der Fassung anschliesst. Dabei kann der Verlängerungsbereich insbesondere eine Innenseite aufweisen, die im Wesentlichen der Innenseite eines Rings entspricht und eben ausgestaltet ist. Ein solcher Verlängerungsbereich ermöglicht, dass der Retentionseinsatz in einem vergrösserten Ausmass auf einer Patrize verkippt werden kann. Insbesondere kann damit die entsprechende vorteilhafte Wirkung der Patrize beziehungsweise des Verbindungsstücks unterstützt und verbessert realisiert sein. Dabei umfasst der Retentionseinsatz vorzugsweise eine Mittellängsachse, wobei ein Durchmesser eines maximalen senkrecht zur Mittellängsachse angeordneten Querschnitts des ersten Bereichs eine Länge von zwischen etwa sechs bis etwa vierzehn, vorzugsweise zwischen etwa acht bis etwa zwölf und insbesondere etwa zehn Mal der Mächtigkeit des Verlängerungsbereichs aufweist.

Der Begriff "etwa" im Zusammenhang mit der Länge des Durchmessers des Querschnitts des ersten Bereichs kann sich auf einen Wert beziehungsweise einen Bereich beziehen, der innerhalb 20%, innerhalb 10%, innerhalb 5% oder innerhalb 2% des gegebenen Werts beziehungsweise Bereichs liegt. Zudem kann sich der Begriff "etwa" insbesondere auch genau auf den angegebenen Wert beziehungsweise Bereich beziehen. Der Begriff "im Wesentlichen senkrecht" in Bezug auf die Anordnung des Querschnitts des ersten Bereichs zur Mittelachse kann sich auf einen Winkelwert, der innerhalb 20%, innerhalb 10%, innerhalb 5% oder innerhalb 2% des angegebenen Werts von 90° liegt. Auch kann er sich insbesondere auf eine genau senkrechte Ausgestaltung also einen Winkel von 90° beziehen. Mit diesen Verhältnissen des ersten Bereichs und des Verlängerungsbereichs kann eine bevorzugt effiziente und zweckmässige erfindungsgemässe Ausgestaltung des Retentionseinsatzes realisiert sein.

Ein anderer weiterer Aspekt der Erfindung betrifft eine Verbindungseinrichtung, die eine Patrize wie oben beschrieben und einen Retentionseinsatz wie oben beschrieben umfasst. Dabei ist der dritte Bereich des Retentionseinsatzes zumindest teilweise beabstandet vom Zwischenabschnitt der Patrize angeordnet ist, wenn der Retentionseinsatz auf die Patrize aufgeschnappt ist und keine äussere Kraft auf den Retentionseinsatz und/oder die Patrize wirken. Unter dem Begriff äussere Kraft" kann in diesem Zusammenhang eine Kraft verstanden werden, die von aussen wirkt und beispielsweise den Retentionseinsatz auf der Patrize bewegt. Nicht als eine Kraft im vorgenannten Sinne kann insbesondere eine Kraft verstanden werden, die zwischen dem Retentionseinsatz und der Patrize zum Halten des Retentionseinsatzes auf der Patrize wirkt. Eine solche Verbindungseinrichtung ermöglicht, dass auf verhältnismässig effiziente Weise die oben detaillierter beschriebene Eigenzentrierfunktion erfindungsgemäss implementiert sein kann und gleichzeitig die oben beschriebene bevorzugte Verkippungsmöglichkeit. Unter anderem kann der Abstand zwischen Zwischenabschnitt der Patrize und drittem Bereich des Retentionseinsatzes zulassen, dass der Retentionseinsatz elastisch gebogen und somit vorgespannt werden kann, wenn er auf der Patrize aufgesetzt ist. Zudem ermöglicht eine solche Kombination der erfindungsgemässen Patrize mit dem erfindungsgemässen Retentionseinsatz den Einschnappabschnitt der Patrize verhältnismässig klein zu dimensionieren und dennoch ausreichende Retentionskräfte bereit zu stellen.

Der vorstehend beschriebene Retentionseinsatz sowie der Retentionseinsatz des Verbindungseinrichtung können wie folgt beschrieben weitergebildet sein:

Der Retentionseinsatz kann dazu ausgestaltet sein, so in einer durch einen Halterand und eine Endseite einer Halteschale beziehungsweise eines Matrizengehäuses gebildeten Aufnahme in der Halteschale anordbar zu sein, dass eine Aussenfläche des Retentionsrandes des Retentionseinsatzes benachbart zu einer Innenfläche des Halterandes der Halteschale liegt.

Dabei ist der Retentionseinsatz vorzugsweise so ausgestaltet, dass die Aussenfläche des Retentionsrandes des Retentionseinsatzes zumindest teilweise beabstandet benachbart von der Innenfläche des Halterandes der Halteschale angeordnet ist, wenn der Retentionseinsatz in der Aufnahme der Halteschale angeordnet ist und wenn im Wesentlichen keine radialen Kräfte auf den Halterand der Halteschale und auf den Retentionsrand des Retentionseinsatzes wirken.

Der Retentionseinsatz kann dabei dazu ausgestaltet sein, dass die Aussenfläche des Retentionsrandes des Retentionseinsatzes zumindest teilweise beabstandet benachbart von der Innenfläche des Halterandes der Halteschale angeordnet ist, indem die Aussenfläche des Retentionsrandes des Retentionseinsatzes stärker in Richtung einer zentralen Achse der Verbindungsvorrichtung geneigt ist als die Innenfläche des Halterandes der Halteschale.

Der Retentionsrand kann einen radial von der Aussenfläche des Retentionsrandes abstehenden Vorsprung aufweisen, wobei der Vorsprung einer von der Innenfläche des Halterandes der Halteschale erstreckenden Nut entsprechend ausgestaltet ist. Dabei kann der Vorsprung des Retentionsrandes so in der Nut des Halterandes der Halteschale anordbar sein, dass der Retentionseinsatz lösbar in der Halteschale gehalten ist, wenn der Retentionseinsatz in der Aufnahme der Halteschale angeordnet ist und wenn im Wesentlichen keine radialen Kräfte auf den Halterand der Halteschale und auf den Retentionsrand des Retentionseinsatzes wirken. Der Vorsprung des Retentionsrandes des Retentionseinsatzes kann dabei eine im Wesentlichen ebene Vorsprungauflagefläche umfassen, wobei ein Teil der Vorsprungauflagefläche an einem Teil einer im Wesentlichen ebenen Nutauflagefläche der Nut des Halterandes der Halteschale anliegt, wenn der Retentionseinsatz in der Aufnahme der Halteschale angeordnet ist und wenn im Wesentlichen keine radialen Kräfte auf den Halterand der Halteschale und auf den Retentionsrand des Retentionseinsatzes wirken, und wobei die Vorsprungauflagefläche gegen ihr der Halteschale zugewandten Ende hin abgerundet ausgestaltet ist.

Der Vorsprung des Retentionsrandes kann dazu ausgestaltet sein, so in der Nut des Halterandes der Halteschale anordbar zu sein, dass der Retentionseinsatz unlösbar mit der Halteschale verbunden ist, wenn der Retentionseinsatz in der Aufnahme der Halteschale angeordnet ist und wenn eine radiale Kraft auf den Retentionsrand des Retentionseinsatzes in Richtung des Halterandes der Halteschale und/oder auf den Halterand der Halteschale in Richtung des Retentionsrandes des Retentionseinsatzes wirkt.

Der Retentionsrand des Retentionseinsatzes kann eine der Aussenfläche entgegengesetzte Innenfläche aufweisen, wobei die Innenfläche gegen das der Endseite des Retentionseinsatzes abgewandte Ende hin abgerundet ausgestaltet ist. Der Retentionseinsatz kann aus einem biokompatiblen polymeren Material insbesondere aus einem Polyetheretherketon hergestellt sein.

Ein anderer Aspekt der vorliegenden Offenbarung betrifft ein Verfahren zum Verbinden einer dentalen Prothesenkonstruktion mit einem Kieferknochen. Das Verfahren umfasst: Befestigen eines Verbindungsstücks wie oben beschrieben, wobei das Verbindungsstück eine Befestigungsstruktur aufweist, über die das Verbindungsstück am Kieferknochen, an einem im Kieferknochen eingepflanzten Implantat, an einem Zahnstumpf oder an einem Nachbarzahn befestigt wird; festes Montieren einer Halteschale an der Prothesenkonstruktion; axiales Eindrücken eines Retentionseinsatzes wie oben beschrieben in die Halteschale bis der Retentionseinsatz in der Halteschale angeordnet ist; Anordnen der Prothesenkonstruktion am Verbindungsstück, so dass ein Kopfende des Verbindungsstücks am Retentionseinsatz anliegt; und Aufdrücken der Prothesenkonstruktion auf das Verbindungsstück, so dass der Retentionseinsatz axial über einen Einschnappabschnitt des Verbindungsstücks gedrückt wird und darauf einschnappt, wobei eine radiale Kraft auf einen Retentionsrand des Retentionseinsatzes wirkt, wodurch der Retentionsrand zumindest teilweise in Richtung eines Halterandes der Halteschale bewegt wird.

Vorzugsweise wird bei dem Verfahren das Verbindungsstück zum Befestigen am Kieferknochen, an einem im Kieferknochen eingepflanzten Implantat, an einem Zahnstumpf oder an einem Nachbarzahn ein Schraubwerkzeug wie oben beschrieben verwendet, wobei das Schraubwerkzeug dazu so auf das Verbindungsstück aufgesetzt wird, dass die Angriffsflächen des Angriffabschnitts des Schraubwerkzeugs an den Angriffsflächen des Körperabschnitts des Verbindungsstücks anliegen. Ein solches Schraubwerkzeug ermöglicht ein effizientes Verschrauben des Verbindungsstücks.

Ein weiterer anderer Aspekt der vorliegenden Offenbarung betrifft eine Messvorrichtung zum Messen einer Gingivahöhe von einer Oberseite eines in einen Kieferknochen eingepflanzten Implantats, das einen länglichen Maßkörper, ein Profilauflageelement und eine Stelleinrichtung umfasst, wobei die Stelleinrichtung dazu ausgestaltet ist, den Maßkörper auf der Oberseite des Implantats abzustellen und wobei das Profilauflageelement bewegbar am Maßkörper befestigt ist, so dass das Profilauflageelement dem Maßkörper entlang verschiebbar ist. Eine solche Messvorrichtung ermöglicht es, die Gingivahöhe in Bezug auf das Implantat zu bestimmen, so dass effizient ein geeignetes Verbindungsstück und insbesondere ein Abutment von geeigneter Höhe ausgewählt werden kann. Dazu wird die Messvorrichtung mittels des Stellelements auf die Oberseite des eingepflanzten Verbindungsstück abgestellt. Das Profilauflageelement wird dann entlang des Maßkörpers verschoben, bis es auf der Gingiva beziehungsweise dem Gingivaprofil aufliegt. In dieser Position kann die Gingivahöhe dann auf einfache Weise beispielsweise über eine auf dem Maßkörper angebrachte Skalierung bestimmt werden.

Vorzugsweise ist die Stelleinrichtung an einem ersten Längsende des Maßkörpers angeordnet. Zudem ist die Stelleinrichtung vorzugsweise als den Maßkörper von einer Längsachse des Maßkörpers aus überragende Stellfläche ausgestaltet. Eine solche Stelleinrichtung ermöglicht ein einfaches effizientes Abstellen der Messvorrichtung auf der Oberseite des Implantats.

Vorzugsweise ist der Maßkörper zylindrisch und insbesondere im Wesentlichen kreiszylindrisch ausgestaltet, was eine einfache Realisierung der Messvorrichtung und eine einfache Ausgestaltung des verschiebbaren Profilauflageelements ermöglicht.

Das Profilauflageelement ist vorzugsweise als Scheibe mir einem Durchgang ausgestaltet, wobei der Durchgang einem Querschnittprofil des Maßkörpers entspricht und wobei der Maßkörper den Durchgang durchragt. Bei einem kreiszylindrischen Maßkörper ist der Durchgang dabei kreisförmig ausgestaltet. Eine solches Profilauflageelement ermöglicht eine einfache zweckmäßige Ausgestaltung des Profilauflageelements.

Vorzugsweise ist ein Anschlag an einem zweiten Längsende des Maßkörpers angeordnet ist, mit dem das Verschieben des Profilauflageelements entlang des Maßkörpers blockierbar ist. Damit kann verhindert werden, dass das Profilauflageelement vom Maßkörper entfernt wird, was eine vereinfachte Handhabung der Messvorrichtung ermöglicht.

Die Messvorrichtung weist weiter vorzugsweise einen Implantatzentrierfortsatz auf, der in eine Öffnung des Implantats einsetzbar ist. Mit einem solchen beispielsweise kreiskegelstumpfförmigen Implantatzentrierfortsatz kann die Messvorrichtung einfach bestimmungsgemäß positioniert werden, was ein effizientes Messen der Gingivahöhe ermöglichen kann.

Vorzugsweise weist die Messvorrichtung einen Haltegriff auf. Mit einem solchen Haltegriff kann die Messvorrichtung bequem manuell bedient werden. Dabei kann der Haltegriff insbesondere benachbart zum zweiten Längsende des Maßkörpers angeordnet sein.

Ein weiterer anderer Aspekt der vorliegenden Offenbarung betrifft eine Zusammenstellung, die eine Messvorrichtung wie vorgängig beschrieben und ein Schraubwerkzeug wie oben beschrieben umfasst. Die Zusammenstellung kann weiter ein Verbindungsstück wie oben beschrieben und/oder einen Retentionseinsatz wie oben beschrieben umfassen. Insbesondere kann die Zusammenstellung auch eine Mehrzahl von Verbindungsstücken umfassen, die beispielsweise über dazu unterschiedliche lang ausgestaltete Gingivahöhenabschnitte unterschiedliche Höhen aufweisen.

### Kurze Beschreibung der Zeichnungen

Im Folgenden wird die Erfindung unter Bezugnahme auf die beigefügten Zeichnungen anhand von Ausführungsbeispielen detaillierter beschrieben. Es zeigen:
- Fig. 1: eine Seitenansicht eines ersten Ausführungsbeispiels eines erfindungsgemässen Abutments;
- Fig. 2: eine vergrösserte Seitenansicht der Patrize des Abutments von Fig. 1;
- Fig. 3: eine Aufsicht auf die Patrize des Abutments von Fig. 1;
- Fig. 4: eine perspektivische Ansicht eines ersten Ausführungsbeispiels eines zu dem Abutment von Fig. 1 passenden erfindungsgemässen Retentionseinsatzes;
- Fig. 5: eine Ansicht von unten an den Retentionseinsatz von Fig. 4;
- Fig. 6: eine Querschnittsansicht entlang der Linie A-A des Retentionseinsatzes von Fig. 5;
- Fig. 7: eine Seitenansicht eines zweiten Ausführungsbeispiels eines erfindungsgemässen Abutments;
- Fig. 8: eine Querschnittsansicht entlang der Linie E-E der Patrize des Abutments von Fig. 7;
- Fig. 9: eine Querschnittsansicht eines zu dem Abutment von Fig. 7 passenden zweiten Ausführungsbeispiels eines erfindungsgemässen Retentionseinsatzes;
- Fig. 10: eine perspektivische Ansicht des Retentionseinsatzes von Fig. 9; und
- Fig. 11: eine teilweise geschnittene Seitenansicht eines Ausführungsbeispiels einer Messvorrichtung.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach aussen" bezeichnen Richtungen hin zum oder weg vom geometrischen Mittelpunkt des Abutments beziehungsweise des Retentionseinsatzes sowie benannter Teile derselben. Die Terminologie umfasst die oben ausdrücklich erwähnten Wörter, Ableitungen von denselben und Wörter ähnlicher Bedeutung.

Zudem gilt für die gesamte nachfolgende Beschreibung folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden Figuren verwiesen.

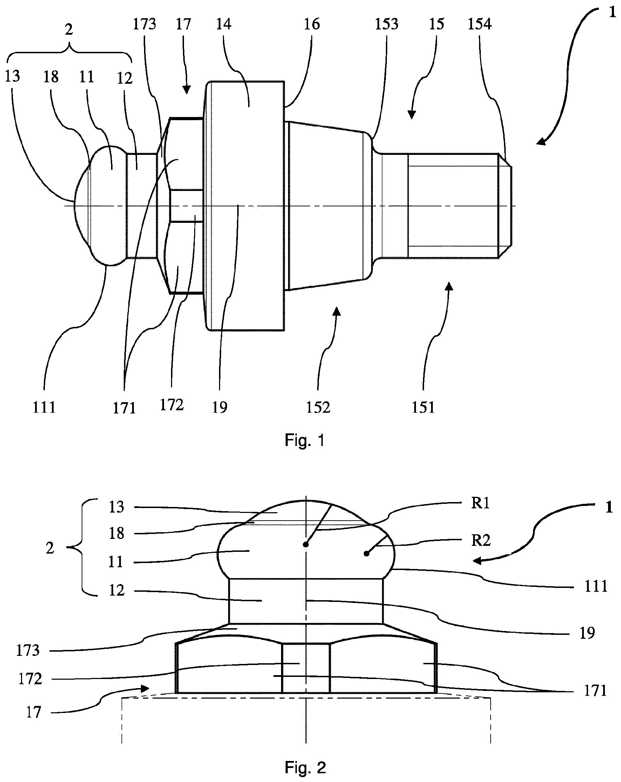

Fig. 1, Fig. 2 und Fig. 3 zeigen ein erstes Ausführungsbeispiel eines einteiligen Abutments 1 als erfindungsgemässes Verbindungsstück mit einer zentralen Längsachse 19, das eine Patrize 2 und eine Befestigungsstruktur mit einem Schraubenabschnitt 15, der einen Zwischenabschnitt 152 ohne Aussengewinde und einen axial daran anschliessenden Gewindeabschnitt 151 mit Aussengewinde aufweist, umfasst. Das Aussengewinde des Gewindeabschnitts 151 ist einem Innengewinde eines zugehörigen Implantats entsprechend ausgestaltet. Der Zwischenabschnitt 152 schliesst an seinem dem Gewindeabschnitt 151 abgewandten Längsende an einen kreiszylindrischen Gingivahöhenabschnitt 14 an. Der Zwischenabschnitt 152 ist vom Gingivahöhenabschnitt 14 zum Gewindeabschnitt 151 hin verjüngend ausgestaltet. Der Gingivahöhenabschnitt 14 überragt den ersten Bereich des Zwischenabschnitts 151 von der Längsachse 19 des Abutments 1 nach aussen hin also in distaler Richtung, so dass eine rechtwinklig zur Längsachse 19 liegende ebene Fläche 16 einen Anschlag bildet. Entgegen dem Gingivahöhenabschnitt 14 geht der Zwischenabschnitt 152 über eine gebogene weitere Anschlagfläche 153 axial in den Gewindeabschnitt 151 des Schraubenabschnitts 15 über. Der Gewindeschnitt 151 endet an seinem der Patrize 2 abgewandten Ende in einem konisch zulaufenden Endbereich 154.

An seinem dem Schraubenabschnitt 15 abgewandten Ende schliesst der Gingivahöhenabschnitt 14 axial über einen Schüsselansetzabschnitt 17 an die Patrize 2 des Abutments 1 an. Der Schlüsselansetzabschnitt 17 weist eine für das Ansetzen eines Vierkantschlüssels geeignete Form auf. Insbesondere umfasst der Schlüsselansetzabschnitt 17 vier dem Umfang des Schlüsselansetzabschnitts 17 entlang und rechtwinklig zueinander angeordnete ebene Angreifflächen 171, von denen jeweils zwei über eine gebogene Verbindungsfläche 172 miteinander verbunden sind. Als Übergang zur Patrize 2 weist der Schlüsselansetzabschnitt 17 einen konischen Übergangsbereich 173 auf, der sich von den Angreifflächen 171 zur Patrize 2 hin verjüngt.

Die Patrize 2 umfasst einen axial an den Übergangsbereich 173 des Schlüsselansetzabschnitts 17 angrenzenden kreiszylindrischen Körperabschnitt 12, der wiederum an seinem dem Schlüsselansetzabschnitt 17 abgewandten Ende in einen Einschnappabschnitt 11 übergeht. Der Einschnappabschnitt 11 weist eine von der Längsachse 19 des Abutments 1 entlang der Längsachse 19 konvex nach aussen beziehungsweise distal gekrümmte Aussenfläche 111 mit einem Krümmungsradius R2 auf. Die Aussenfläche 111 überragt von der Längsachse des Abutments aus nach aussen beziehungsweise distal im Wesentlichen vollständig die Aussenfläche des Körperabschnitts 12. Der Einschnappabschnitt 11 geht an seinem dem Körperabschnitt 12 abgewandten Ende über einen konkaven Zwischenabschnitt 18 in ein kugelsegmentförmiges Kopfende 13 mit einem Krümmungsradius R1 über. Der Krümmungsradius R1 des Kopfendes 13 ist etwa drei Mal so gross wie der Krümmungsradius R2 der Aussenfläche 111 des Einschnappabschnitts 11. Der Körperabschnitt 12, der Einschnappabschnitt 11, der Zwischenabschnitt 18 und das Kopfende 13 bilden zusammen die Patrize 2.

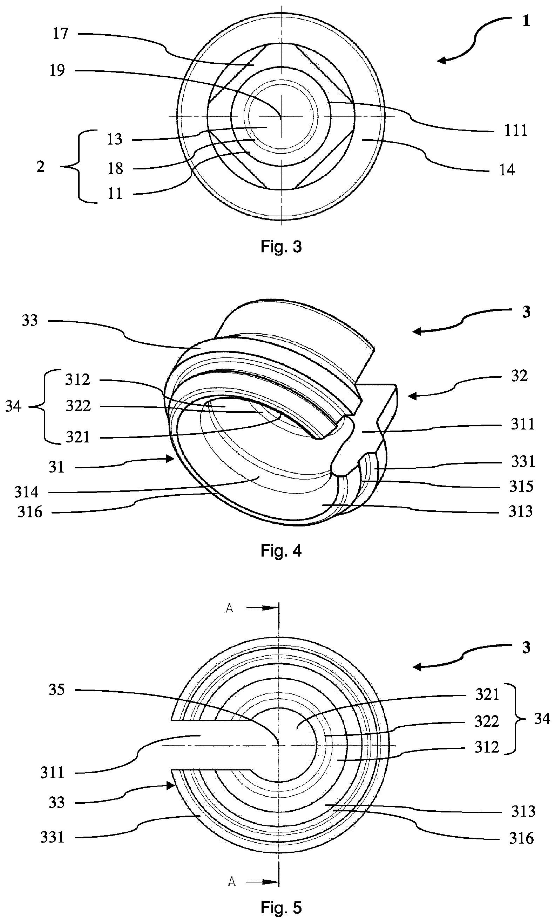

In Fig. 3 ist das Abutment 1 in einer Aufsicht gezeigt. Darin ist insbesondere ersichtlich, dass die vier Angreifflächen 171 des Schlüsselansetzabschnitts 17 jeweils in einem rechten Winkel zu den benachbarten Angreifflächen 171 angeordnet und über eine der gebogene Verbindungsflächen 172 mit einem der benachbarten Angreifflächen 171 verbunden sind. So beschreibt der Querschnitt des Schlüsselansetzabschnitts 17 einen Vierkant, wobei die Angreifflächen 171 in einem rechten Winkel zueinander stehen und wobei die Längsachse 19 des Abutments 1 den Mittelpunkt des Hexagons bilden. Der Schlüsselansetzabschnitt 17 überragt die Patrize 2 von der Längsachse 19 aus nach aussen hin also in distaler Richtung.

Das Abutment 1 ist vollständig aus Titan hergestellt, wobei alternativ dazu auch ein anderes biokompatibles Material möglich ist. Der Durchmesser des grössten rechtwinklig zur Längsachse 19 liegenden Querschnitts des Einschnappabschnitts 11 hat eine Länge von 2.1 mm bis 2.7 mm und insbesondere von 2.3 mm. Der grösste Durchmesser des rechtwinklig zur Längsachse 19 liegenden Querschnitts des Schlüsselansetzabschnitts 17 hat eine Länge von 3.1 mm bis 3.7 mm und insbesondere von 3.4 mm. Der Abstand von den jeweils zwei parallelen Angreifflächen 171 beträgt zwischen 2.5 mm und 3.1 mm und insbesondere 2.8 mm. Die Patrize 2 hat eine Gesamthöhe von zwischen 3 mm und 3.8 mm und insbesondere von 3.4 mm. Der Krümmungsradius R1 des kugelsegmentförmigen Kopfendes 13 hat eine Länge von zwischen 1 mm und 1.4 mm und insbesondere von 1.2 mm. Der Krümmungsradius R2 der Aussenfläche 111 des Einschnappabschnitts 11 hat eine Länge von zwischen 0.3 mm und 0.5 mm und insbesondere von 0.4 mm.

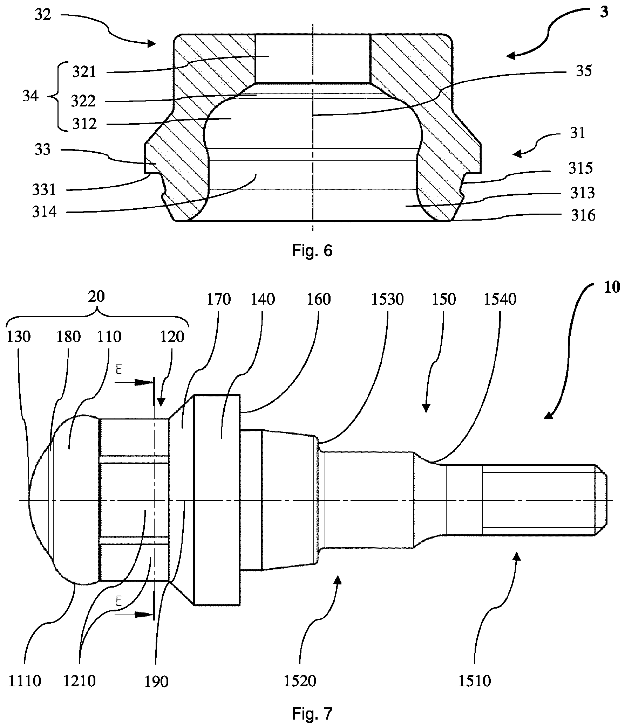

Fig. 4 zeigt ein erstes Ausführungsbeispiel eines erfindungsgemäßen, zu der Patrize 2 des Abutments 1 der vorangehenden Fig. passenden Retentionseinsatzes 3 in einer perspektivischen Ansicht. Fig. 5 zeigt eine Ansicht von unten an den gleichen Retentionseinsatz 3 und Fig. 6 eine Schnittansicht des gleichen Retentionseinsatzes 3. Der im Wesentlichen topfförmige Retentionseinsatz 3 mit einer zentralen Achse 35 umfasst eine im Wesentlichen kreisscheibenförmige Endseite 32 mit einer zentralen kreisrunden Öffnung 321 als ersten Bereich und einen angewinkelt am Umfang davon abstehenden im Wesentlichen ringförmigen Retentionsrand 31. Der Retentionsrand 31 ist von einem vertikalen Schlitz 311 durchbrochen, der sich bis zur Öffnung 321 des Retentionsrandes 32 erstreckt. Der Schlitz 311 ist senkrecht zur Endseite 32 angeordnet und gerade ausgestaltet.

Der Retentionsrand 31 weist eine Außenfläche und eine der Außenfläche entgegengesetzte Innenfläche, wobei die Innenfläche gegen das offene Ende des Retentionseinsatzes 3 also gegen das der Endseite 32 abgewandte Ende des Retentionseinsatzes 3 hin nach außen abgerundet ausgestaltet ist und somit einen entsprechenden gekrümmten Abschnitt 313 aufweist. Dabei weist die Innenfläche des Retentionsrandes 31 einen oberen nach innen gekrümmten konkaven ersten Bereich 312 mit einem positiven Krümmungsradius auf, der nach unten über einen leicht konvex gekrümmten Abschnitt in einen Verlängerungsbereich 314 übergeht. Der Verlängerungsbereich 314 hat eine ebene Innenseite, die im Wesentlichen die Form einer Innenseite eines Ringes hat. Nach oben geht der erste Bereich 312 des Retentionsrandes 31 wiederum über einen leicht konvex gekrümmten Abschnitt in einen dritten Bereich 322 der Endseite 32 mit einer sich nach oben konisch verjüngenden Innenfläche über. Der dritte Bereich 322 geht nach oben in die Öffnung 321 der Endseite 32 über. Der erste Bereich 311 des Retentionsrandes 31 bildet zusammen mit dem dritten Bereich 322 und der Öffnung 321 der Endseite 32 eine Fassung 34.

Am der Endseite 32 abgewandten Ende des Retentionsrandes 31 geht der nach außen gekrümmten Abschnitt 313 in einen ebenen Abschnitt 316 über, der das der Endseite 32 abgewandte Ende des Retentionseinsatzes 3 bildet. In Anwendung des Retentionseinsatzes 3 kann der ebene Abschnitt 316 dem apikalen Ende des Retentionseinsatzes 3 entsprechen.

Etwa in der Mitte des Retentionsrandes 31 ist ein radial von der Außenfläche des Retentionsrandes 31 abstehender riegelförmiger Vorsprung 33 beziehungsweise Balken ausgestaltet, der sich über den ganzen Umfang des Retentionsrandes 31 erstreckt. Der Vorsprung 33 umfasst eine ebene radiale Außenseite, eine rechtwinklig dazu ausgestaltete ebene Oberseite, die der Endseite 32 zugewandt ist, und eine der Oberseite entgegengesetzte ebene Unterseite, die der Endseite 32 abgewandt ist und die eine Vorsprungauflagefläche 331 definiert. Wie in Fig. 5 gut ersichtlich ist, überragt der Vorsprung 33 den Rest des Retentionseinsatzes 3 radial nach außen hin.

In Richtung des der Endseite 32 abgewandten Endes des Retentionsrandes 31 ist eine Eingreifkerbe 315 benachbart zum Vorsprung 33 an der Außenfläche ausgebildet. Über die Eingreifkerbe 315 kann der Retentionseinsatz 3 über ein geeignetes Montagewerkzeug, wie es beispielsweise in der WO 2011/027229 A2 beschrieben ist, gehalten werden. Damit kann der Retentionseinsatz 3 auf bevorzugte Weise montiert und manipuliert werden.

Der Retentionseinsatz 1 ist vollständig aus Polyetheretherketon hergestellt, wobei alternativ dazu auch ein anderes biokompatibles polymeres oder nicht polymeres Material möglich ist. Der Krümmungsradius des ersten Bereichs 312 der Fassung 34 ist entsprechend dem Krümmungsradius R1 der Aussenfläche 111 des Einschnappabschnitts 11 der Patrize 2 ausgestaltet und hat eine Länge von zwischen 0.3 mm und 0.5 mm und insbesondere von 0.4 mm. Die Öffnung 321 der Fassung 34 hat einen Durchmesser von zwischen 1.5 mm bis 1.7 mm und insbesondere von 1.6 mm. Der Verlängerungsbereich 314 hat eine Mächtigkeit beziehungsweise Höhe von zwischen 0.1 mm bis 0.5 mm oder 0.2 mm bis 0.4 mm und insbesondere von 0.3 mm.

In Anwendung des Abutments 1 zusammen mit dem Retentionseinsatz 3 wird zum einen das Abutment 1 beziehungsweise meist mehrere solche Abutments 1 über ein eingepflanztes Implantat mit einem Kieferknochen fest verbunden. Parallel dazu wird eine Prothesenkonstruktion so vorbereitet, dass Öffnungen beziehungsweise Sacklöcher an der oder den Stellen der Prothesenkonstruktion vorgesehen sind, an denen die Prothesenkonstruktion mittels einer oder mehrerer Matrizen mit dem oder den Abutment(s) 1 verbindbar sein soll. Auf die Patrizen 2 der Abutments 1 werden dann die Retentionseinsätze 3 und passende Matrizengehäuse aufgesetzt. Dabei ermöglicht die Geometrie der Patrizen 2 insbesondere mit ihren konkaven Zwischenabschnitten 18 und die Geometrie der Retentionseinsätze 3 insbesondere mit deren Fassungen 34, dass die Retentionseinsätze 3 in vorbestimmter Ausrichtung und Position ausreichend auf den Patrizen 2 gehalten werden und dass ein unbeabsichtigtes Verkippen der Retentionseinsätze 3 auf den Patrizen 2 vermieden oder zumindest eingeschränkt werden kann. Die Patrizen 2 üben somit jeweils eine Eigenzentrierfunktion auf die zugehörige Matrize beziehungsweise deren Retentionseinsatz 3 aus. Insbesondere wird durch die Geometrie der Patrizen 2 jeweils der zugehörige Retentionseinsatz 3 bei einer Verkippung vorgespannt, so dass er automatisch wieder in die erwähnte bevorzugte vorbestimmte Ausrichtung beziehungsweise Position bewegt wird, sobald er den notwendigen Freiraum dazu erhält. In dieser bevorzugten vorbestimmten Ausrichtung beziehungsweise Position können die Patrizen 2 dann in den Öffnungen der Prothesenkonstruktion angeordnet werden und die Matrizengehäuse können beispielsweise über Auspolymerisierung der Öffnungen der Prothesenkonstruktion fest mit der Prothesenkonstruktion verbunden werden.

Im täglichen Gebrauch der Abutments 1 und der Retentionseinsätze 3 ermöglicht die Geometrie der Patrizen 2 der Abutments 1 und der Fassungen 34 der Retentionseinsätze 3, dass ein verhältnismässig starkes Kippen der Matrizen auf den Patrizen 2 möglich ist. Insbesondere geben die jeweiligen Verlängerungsabschnitte 314 der Retentionseinsätze 3 zusätzlichen Freiraum für eine solche Kippbewegung.

Auch ermöglicht die kugelsegmentförmige Form der Patrizen 2 der Abutments 1, dass beim Aufsetzen der an der Prothesenkonstruktion montierten Matrizen die Prothesenkonstruktion einfach und auf verhältnismässig sanfte Weise genau positioniert werden kann, so dass ein komfortables Einsetzen der Prothesenkonstruktion möglich ist und beispielsweise durch Ecken oder Kanten des Kopfendes verursachte Beschädigungen an den Matrizen vermieden werden können. Zudem bewirkt die Ausgestaltung der Patrizen 2, dass deren Kopfenden 13 verhältnismässig weit axial beabstandet von der den Körperabschnitten 12 entgegengesetzten Seiten der Einschnappabschnitte 11 angeordnet ist. Dadurch liegen die Kopfenden 13 der Patrize 2 im Vergleich zu ihren Einschnappabschnitten 11 erhöht, das heisst sie erstrecken sich weiter in den Mundinnenraum eines Patienten. Auf diese Weise können sich die Kopfenden 13 im Vergleich zu den Einschnappabschnitten 11 weiter vom Zahnfleisch abheben, so dass sich die Patrizen 2 vor einem Einsetzen der Prothesenkonstruktion verhältnismässig leicht und eindeutig lokalisieren lässt.

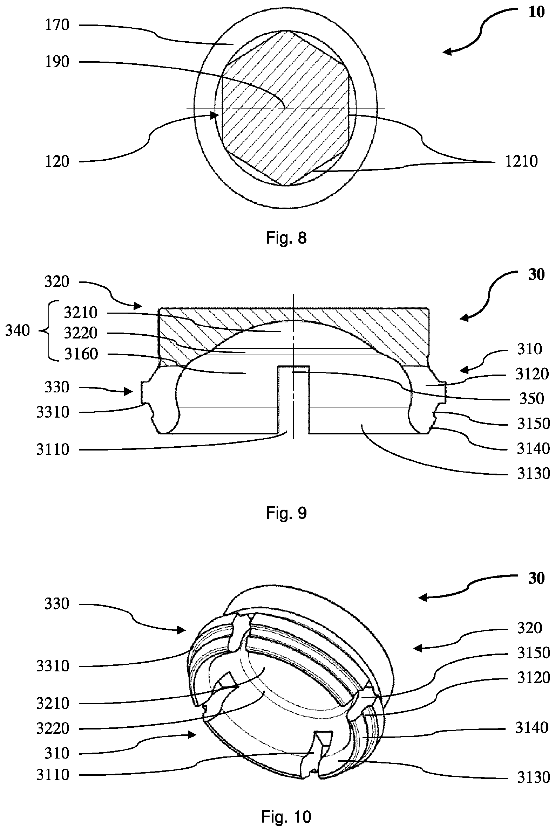

Fig. 7 und Fig. 8 zeigen ein zweites Ausführungsbeispiel eines einteiligen Abutments 10 als erfindungsgemässes Verbindungsstück, das ähnlich wie das Abutment der Fig. 1, Fig. 2 und Fig. 3 mit einer zentralen Längsachse 190, einer Patrize 20, einem Gingivahöhenabschnitt 140, und einem Schraubenabschnitt 150 ausgestaltet ist. Der Schraubenabschnitt 150 umfasst einen Zwischenabschnitt 1520 mit einer ersten Anschlagfläche 1530 und einer zweiten Anschlagfläche 1540 und einen Gewindeabschnitt 1510. Zwischen dem Schraubenabschnitt 150 und dem Gingivahöhenabschnitt 140 ist eine rechtwinklig zur Längsachse 190 liegende ebene Fläche 160 als Anschlag gebildet.

Die Patrize 20 des Abutments 10 umfasst eine axial an einen kreiskegelstumpfförmigen Übergangsabschnitt 170 angrenzenden hexagonzylindrischen Körperabschnitt 120, der wiederum an seinem dem Übergangsabschnitt 170 abgewandten Ende in einen Einschnappabschnitt 110 übergeht. Die Aussenfläche des Körperabschnitts 120 ist aus sechs in einem 60°-Winkel zueinander stehenden rechteckigen Angreifflächen 1210 gebildet.

Der Einschnappabschnitt 110 weist eine von der Längsachse 190 des Abutments 10 entlang der Längsachse 190 konvex nach aussen also distal gekrümmte Aussenfläche 1110 auf. Die Aussenfläche 1110 überragt von der Längsachse 190 des Abutments 10 aus nach aussen also in distaler Richtung im Wesentlichen vollständig die Aussenfläche des Körperabschnitts 120. Der Einschnappabschnitt 110 geht an seinem dem Körperabschnitt 120 abgewandten Ende über einen Zwischenabschnitt 180 mit konkav gekrümmter Aussenfläche in ein kugelsegmentförmiges Kopfende 130 über.

Das Abutment 10 ist vollständig aus Titan hergestellt, wobei alternativ dazu auch ein anderes geeignetes biokompatibles Material möglich ist. Der Einschnappabschnitt 110 weist einen grösseren Durchmesser des grössten rechtwinklig zur Längsachse 190 liegenden Querschnitts auf als der Einschnappabschnitt 11 des Abutments 1 von Fig. 1, Fig. 2 und Fig. 3 und ist in etwa so dimensioniert wie die Einschnappabschnitte herkömmlich bekannter analoger Druckknopfverbindungen. Das heisst, er liegt in einem Bereich von etwa 3.8 mm bis etwa 4 mm und insbesondere von etwa 3.9 mm.

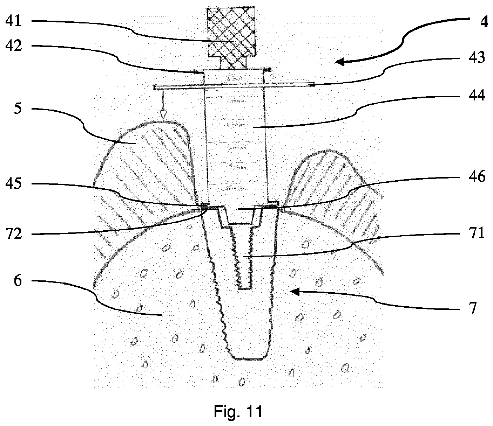

Fig. 10 und Fig. 11 zeigen ein für den Einsatz mit dem Abutment 10 von Fig. 7 und Fig. 8 geeigneten, erfindungsgemässen Retentionseinsatz 30 mit einer Mittelachse 350. Der Retentionseinsatz 30 umfasst eine Endseite 320 und einen Retentionsrand 310 mit einer Aussenfläche 3140, vier Ausnehmungen 3110 und Lamellenabschnitten 3120. Weiter weist der Retentionseinsatz 30 einen riegelförmigen Vorsprung 330 mit einer ebenen radialen Aussenseite, einer rechtwinklig dazu ausgestaltete ebenen Oberseite und einer rechtwinklig dazu ausgestaltete ebenen Unterseite, die eine Vorsprungauflagefläche 3310 beschreibt. Ebenfalls ist unterhalb des Vorsprungs 330 eine Einhängrille 3150 ausgestaltet.

Die Lamellenabschnitte 3120 weisen eine Innenfläche 3160 als ersten Bereich einer Fassung 340 auf, die eine der Aussenfläche 3140 entgegengesetzte Innenfläche des Retentionsrandes 310 beschreiben. Die Innenflächen 3160 der Lamellenabschnitte 3120 sowie ein konkaver Zwischenabschnitt 3220 als dritter Bereich der Fassung 340 und eine kugelsegmentförmige Innenfläche 3210 der Endseite 320 als zweiter Bereich der Fassung 340 sind zusammen korrespondierend zu der Aussenfläche des Einschnappabschnitts 110, des Auflageabschnitts 180 und der Endseite 130 also der Patrize 20 des Abutments 10 ausgestaltet. Zudem sind die Innenflächen 3160 der Lamellenabschnitte 3120 gegen das offene Ende des Retentionseinsatzes 30 also gegen das der Endseite 320 abgewandte Ende des Retentionseinsatzes 30 hin nach aussen abgerundet ausgestaltet und weisen somit einen entsprechenden gekrümmten Abschnitt 3130 auf.

Im Betrieb kann der Retentionseinsatz 30 analog zu den in der WO 2011/027229 A2 beschriebenen Retentionseinsätzen zusammen mit einer entsprechenden Halteschale zum Verbinden einer Prothesenkonstruktion mit dem Abutment 10 vorteilhaft verwendet werden. Zudem ermöglicht der Zwischenabschnitt 3220 des Retentionseinsatzes 30, dass der Retentionseinsatz 30 bestimmungsgemäss mit einem herkömmlichen Abutment, das wie beispielsweise in der WO 2010/025034 A1 beschrieben eine Öffnung an seinem Kopfende aufweist, verwendet werden kann.

In Fig. 11 ist eine Messvorrichtung 4 zum Messen einer Gingivahöhe von einer Oberseite 72 eines in einen Kieferknochen 6 eingepflanzten Implantats 7 gezeigt. Das Implantat 7 ist in etwa bündig in den Kieferknochen 6 eingepflanzt und weist an seine Oberseite 72 ein sich ins Innere des Implantats erstreckendes Sackloch 71. Das Sackloch 72 weist teilweise ein Innengewinde auf, in das ein Außengewinde eines Abutments einschraubbar ist.

Die Messvorrichtung 4 umfasst einen kreiszylindrischen Maßkörper 44 mit einer Skalierung auf seiner Außenfläche, der an seinem unteren ersten Längsende in eine kreisscheibenförmige Stellfläche 45 als Stelleinrichtung übergeht. Die Stellfläche 45 überragt den Maßkörper 44 von einer Mittellängsachse des Maßkörpers 44 aus nach außen. An seiner dem Maßkörper 44 abgewandten Seite ist ein kegelstumpfförmiger Implantatzentrierfortsatz 46 an der Stellfläche 45 angeordnet.

Die Messvorrichtung 4 umfasst weiter eine höhenverstellbare Scheibe 43 als Profilauflageelement, die einen kreisförmigen Durchgang aufweist, durch welchen sich der Maßkörper 44 hindurch erstreckt. Die Scheibe 43 ist längs entlang des Maßkörpers beweg- beziehungsweise verschiebbar. An einem oberen zweiten Längsende weist der Maßkörper 44 einen Scheibenanschlag 42 auf, der eine Bewegung der Scheibe 43 nach oben hin blockiert und begrenzt, so das die Scheibe 43 nicht vom Maßkörper 44 wegbewegt werden kann.

Oberhalb des Scheibenanschlags 42, das heißt an einer dem Maßkörper 44 abgewandten Seite des Scheibenanschlags 42, ist ein Haltegriff 41 ausgestaltet, an dem die Messvorrichtung 4 zu einer einfachen Handhabung manuell gehalten werden kann.

Im Betrieb wird die Messvorrichtung am Haltegriff 41 von einem Benutzer gehalten und mit dem Implantatzentrierfortsatz 46 in das Sackloch 71 des Implantats eingeführt bis wie in Fig. 12 gezeigt die Stellfläche 45 auf der Oberseite 72 des Implantats 7 aufliegt. Wie mit dem Pfeil in Fig. 12 angedeutet, wird dann die Scheibe 43 bis auf das Profil einer an den Kieferknochen 6 anschließenden Gingiva 5 entlang des Maßkörpers 44 verschoben beziehungsweise abgesenkt. In dieser Position, in der die Scheibe 43 am Gingivaprofil anliegt, wird mittels der Skalierung am Maßkörper 44 die Gingivahöhe abgelesen, Beispielsweise kann die Skalierung für ein Ablesen von Gingivahöhen in einem Bereich von etwa 0 mm bis etwa 6 mm ausgestaltet sein. Die so abgelesene Gingivahöhe kann beispielsweise dazu verwendet werden, ein geeignet dimensioniertes Abutment beziehungsweise eine geeignete Abutmenthöhe auszuwählen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen, Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche weitere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die blosse Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder - bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

Die vorliegende Offenbarung umfasst weiter folgende Ausführungsbeispiele verschiedener Gegenstände:
Ausführungsbeispiel 1 ist ein Abutment zur Verbindung einer dentalen Prothesenkonstruktion mit einem Kieferknochen, das mit einer Befestigungsstruktur ausgebildet ist, über die das Abutment am Kieferknochen, an einem im Kieferknochen eingepflanzten Implantat, an einem Zahnstumpf oder an einem Nachbarzahn befestigbar ist, umfassend: einen Körperabschnitt mit einer im Wesentlichen einer Mantelfläche eines Zylinders entsprechenden Außenfläche, wobei die Mittelachse des Zylinders eine Längsachse des Abutments definiert; einen in Bezug auf die Längsachse des Abutments zum Körperabschnitt axial versetzten Einschnappabschnitt, der eine konvex gekrümmte Außenfläche umfasst, die die Außenfläche des Körperabschnitts von der Längsachse des Abutments aus nach außen überragt; und ein das Abutments in Bezug auf seine Längsachse axial abschließendes Kopfende, wobei der Einschnappabschnitt näher beim Kopfende angeordnet ist als der Körperabschnitt, wobei der Zylinder der Mantelfläche, die im Wesentlichen der Außenfläche des Körperabschnitts entspricht, einen senkrecht zur Längsachse des Abutments liegenden Querschnitt im Wesentlichen in der Form eines Vielecks aufweist, so dass mehrere im Wesentlichen rechteckige Angriffsflächen an der Außenfläche des Körperabschnitts ausgestaltet sind.
Ausführungsbeispiel 2 ist das Abutment von Ausführungsbeispiel 1, bei dem der Querschnitt des Zylinders der Mantelfläche, die im Wesentlichen der Außenfläche des Körperabschnitts entspricht, im Wesentlichen die Form eines Hexagons oder eines Oktagons aufweist.
Ausführungsbeispiel 3 ist das Abutment von Ausführungsbeispiel 1 oder 2, bei dem das Kopfende des Abutments im Wesentlichen vollständig konvex gekrümmt und geschlossen ausgestaltet ist.
Ausführungsbeispiel 4 ist das Abutment von Ausführungsbeispiel 3, bei dem das Kopfende des Abutments im Wesentlichen einem Segment einer Kugelfläche entspricht.
Ausführungsbeispiel 5 ist das Abutment von Ausführungsbeispiel 3 oder 4, bei dem zwischen der konvex gekrümmten Außenfläche des Einschnappabschnitts und dem konvex gekrümmten Kopfende ein Auflageabschnitt mit einer konkav gekrümmten Außenfläche angeordnet ist.
Ausführungsbeispiel 6 ist das Abutment von einem der vorangehenden Ausführungsbeispiele, bei dem die Befestigungsstruktur einen sich axial vom Kopfende weg erstreckenden Schraubenabschnitt aufweist, der zumindest teilweise ein Außengewinde umfasst.
Ausführungsbeispiel 7 ist das Abutment von einem der vorangehenden Ausführungsbeispiele, das einen im Wesentlichen zylindrischen Gingivahöhenabschnitt umfasst, der den Körperabschnitt von der Längsachse des Abutments aus nach außen überragt, wobei der Körperabschnitt näher beim Kopfende des Abutments angeordnet ist als der Gingivahöhenabschnitt.
Ausführungsbeispiel 8 ist das Abutment von Ausführungsbeispiel 6 und 7, bei dem der Gingivahöhenabschnitt den Schraubenabschnitt der Befestigungsstruktur von der Längsachse des Abutments aus nach außen überragt, wobei ein Anschlag zwischen dem Gingivahöhenabschnitt und dem Schraubenabschnitt der Befestigungsstruktur ausgestaltet ist.
Ausführungsbeispiel 9 ist das Abutment von Ausführungsbeispiel 8, bei dem der Anschlag zwischen dem Körperabschnitt und dem Schraubenabschnitt der Befestigungsstruktur als eine im Wesentlichen rechtwinklig zur Längsachse angeordnete im Wesentlichen ebene Fläche ausgestaltet ist.
Ausführungsbeispiel 10 ist das Abutment von einem der Ausführungsbeispiele 6 bis 9, bei dem der Schraubenabschnitt der Befestigungsstruktur einen Zwischenabschnitt ohne Außengewinde und einen Gewindeabschnitt mit Außengewinde umfasst.
Ausführungsbeispiel 11 ist das Abutment von Ausführungsbeispiel Anspruch 10, bei dem sich der Zwischenabschnitt des Schraubenabschnitts der Befestigungsstruktur vom Gingivahöhenabschnitt zum Gewindeabschnitt verjüngt.
Ausführungsbeispiel 12 ist das Abutment von Ausführungsbeispiel 11, bei dem der Zwischenabschnitt mindestens eine Stufe aufweist.
Ausführungsbeispiel 13 ist eine Verbindungseinrichtung zur Verbindung einer dentalen Prothesenkonstruktion mit einem Kieferknochen, die ein Abutment gemäß einem der Ausführungsbeispiele 1 bis 12 und einen Retentionseinsatz zum Aufschnappen auf den Einschnappabschnitt des Abutments umfasst, wobei der Retentionseinsatz eine Endseite und einen davon abstehenden im Wesentlichen ringförmigen Retentionsrand aufweist, wobei die Endseite und der davon abstehende im Wesentlichen ringförmige Retentionsrand ein Aufnahme mit einer Innenfläche bilden, die korrespondierend zur Außenfläche des Abutments vom Einschnappabschnitt bis zum Kopfende ausgestaltet ist.
Ausführungsbeispiel 14 ist ein Retentionseinsatz zum Aufschnappen auf einen Einschnappabschnitt eines Abutments gemäß einem der der Ausführungsbeispiele 1 bis 12, der eine Endseite und einen davon abstehenden im Wesentlichen ringförmigen Retentionsrand aufweist, wobei die Endseite und der davon abstehende im Wesentlichen ringförmige Retentionsrand eine Aufnahme mit einer Innenfläche bilden, die einen korrespondierend zur Außenfläche des Einschnappabschnitts des Abutments ausgestalteten ersten konkaven Bereich, einen zur Aufnahme des Kopfendes des Abutments ausgestalteten zweiten konkaven Bereich und einen zwischen dem ersten konkaven Bereich und dem zweiten konkaven Bereich ausgestalteten konvexen Bereich umfasst.
Ausführungsbeispiel 15 ist ein Verfahren zum Verbinden einer dentalen Prothesenkonstruktion mit einem Kieferknochen, umfassend:
   Befestigen eines Abutments nach einem der Ausführungsbeispiele 1 bis 14, wobei das Abutment eine Befestigungsstruktur aufweist, über die das Abutment am Kieferknochen, an einem im Kieferknochen eingepflanzten Implantat, an einem Zahnstumpf oder an einem Nachbarzahn befestigt wird;
   festes Montieren einer Halteschale an der Prothesenkonstruktion;
   axiales Eindrücken eines Retentionseinsatzes nach Ausführungsbeispiel 16 in die Halteschale bis der Retentionseinsatz in der Halteschale angeordnet ist;
   Anordnen der Prothesenkonstruktion am Abutment, so dass ein Kopfende des Abutments am Retentionseinsatz anliegt; und
   Aufdrücken der Prothesenkonstruktion auf das Abutment, so dass der Retentionseinsatz axial über einen Einschnappabschnitt des Abutments gedrückt wird und darauf einschnappt, wobei eine radiale Kraft auf einen Retentionsrand des Retentionseinsatzes wirkt, wodurch der Retentionsrand zumindest teilweise in Richtung eines Halterandes der Halteschale bewegt wird.
Ausführungsbeispiel 16 ist das Verfahren nach Ausführungsbeispiel 15, bei dem das Abutment zum Befestigen am Kieferknochen, an einem im Kieferknochen eingepflanzten Implantat, an einem Zahnstumpf oder an einem Nachbarzahn ein Schraubwerkzeug verwendet wird, wobei das Schraubwerkzeug dazu so auf das Abutment aufgesetzt wird, dass Angriffsflächen eines Angriffabschnitts des Schraubwerkzeugs an den Angriffsflächen des Körperabschnitts des Abutments anliegen.
Ausführungsbeispiel 17 ist eine Messvorrichtung zum Messen einer Gingivahöhe von einer Oberseite eines in einen Kieferknochen eingepflanzten Implantats, das einen länglichen Maßkörper, ein Profilauflageelement und eine Stelleinrichtung umfasst, wobei die Stelleinrichtung dazu ausgestaltet ist, den Maßkörper auf der Oberseite des Implantats abzustellen und wobei das Profilauflageelement bewegbar am Maßkörper befestigt ist, so dass das Profilauflageelement dem Maßkörper entlang verschiebbar ist.
Ausführungsbeispiel 18 ist die Messvorrichtung nach Ausführungsbeispiel 17, bei dem die Stelleinrichtung an einem ersten Längsende des Maßkörpers angeordnet ist.
Ausführungsbeispiel 19 ist die Messvorrichtung nach Ausführungsbeispiel 17 oder 18 bei dem die Stelleinrichtung als den Maßkörper von einer Längsachse des Maßkörpers aus überragende Stellfläche ausgestaltet ist.
Ausführungsbeispiel 20 ist die Messvorrichtung nach einem der Ausführungsbeispiele 17 bis 19, bei dem der Maßkörper zylindrisch ausgestaltet ist.
Ausführungsbeispiel 21 ist die Messvorrichtung nach einem der Ausführungsbeispiele 17 bis 20 bei dem das Profilauflageelement als Scheibe mir einem Durchgang ausgestaltet, wobei der Durchgang einem Querschnittprofil des Maßkörpers entspricht und wobei der Maßkörper den Durchgang durchragt.
Ausführungsbeispiel 22 ist die Messvorrichtung nach einem der Ausführungsbeispiele 17 bis 21, bei dem ein Anschlag an einem zweiten Längsende des Maßkörpers angeordnet ist, mit dem das Verschieben des Profilauflageelements entlang des Maßkörpers blockierbar ist.
Ausführungsbeispiel 23 ist die Messvorrichtung nach einem der Ausführungsbeispiele 17 bis 22, das einen Implantatzentrierfortsatz aufweist, der in eine Öffnung des Implantats einsetzbar ist.
Ausführungsbeispiel 24 ist die Messvorrichtung nach einem der Ausführungsbeispiele 17 bis 2, das einen Haltegriff aufweist.

## Patentansprüche

1. Patrize (2; 20) zur reversibel lösbaren Verbindung einer dentalen Prothesenkonstruktion mit einem Kieferknochen, welche Patrize (2; 20) mit einer Befestigungsstruktur ausgebildet ist, über die die Patrize (2; 20) am Kieferknochen, an einem im Kieferknochen eingepflanzten Implantat, an einem Zahnstumpf oder an einem Nachbarzahn befestigbar ist, umfassend:
einen Körperabschnitt (12; 120) mit einer einer Mantelfläche eines Zylinders entsprechenden Aussenfläche, wobei die Mittelachse des Zylinders eine Längsachse (19; 190) der Patrize (2; 20) definiert;
einen in Bezug auf die Längsachse (19; 190) der Patrize (2; 20) zum Körperabschnitt (12; 120) axial versetzten Einschnappabschnitt (11; 110), der eine entlang der Längsachse (19; 190) konvex gekrümmte Aussenfläche umfasst, die die Aussenfläche des Körperabschnitts (12; 120) von der Längsachse (19; 190) der Patrize (2; 20) aus nach aussen überragt; und
ein die Patrize (2; 20) in Bezug auf seine Längsachse (19; 190) axial abschliessendes Kopfende (13; 130),
wobei der Einschnappabschnitt (11; 110) näher beim Kopfende (13; 130) angeordnet ist als der Körperabschnitt (12; 120), wobei zwischen der konvex gekrümmten Aussenfläche des Einschnappabschnitts (11; 110) und dem Kopfende (13; 130) ein konkaver Zwischenabschnitt (18; 180) angeordnet ist, **dadurch gekennzeichnet dass** das Kopfende (13; 130) der Patrize (2; 20) vollständig konvex gekrümmt und geschlossen ausgestaltet ist.

2. Patrize (2; 20) nach Anspruch 1, bei der der Zwischenabschnitt (18; 180) der Patrize (2; 20) eine konkav gekrümmte Aussenfläche aufweist.

3. Patrize (2; 20) nach Anspruch 1 oder 2, bei dem das Kopfende (13; 130) der Patrize (2; 20) einem Segment einer Kugelfläche entspricht.

4. Patrize (2; 20) nach Anspruch 3, bei der das Segment der Kugelfläche des Kopfendes einen ersten Krümmungsradius (R1) aufweist und die konvex gekrümmten Aussenfläche des Einschnappabschnitts einen zweiten Krümmungsradius (R2), wobei der erste Krümmungsradius (R1) grösser ist als der zweite Krümmungsradius (R2).

5. Patrize (2; 20) nach Anspruch 4, bei der der erste Krümmungsradius (R1) etwa zwei bis etwa vier Mal grösser ist als der zweite Krümmungsradius (R2) und insbesondere etwa drei Mal grösser.

6. Verbindungsstück zur Verbindung einer dentalen Prothesenkonstruktion mit einem Kieferknochen, umfassend:
eine Patrize (2; 20) nach einem der vorangehenden Ansprüche; und
eine Befestigungsstruktur (15; 150), über die das Verbindungsstück am Kieferknochen oder an einem im Kieferknochen eingepflanzten Implantat befestigbar ist.

7. Verbindungsstück nach Anspruch 6, bei dem die Befestigungsstruktur (15; 150) einen sich vom Kopfende (13; 130) der Patrize (2; 20) weg erstreckenden Schraubenabschnitt (15; 150) aufweist, an dem zumindest teilweise ein Aussengewinde ausgebildet ist.

8. Verbindungsstück nach Anspruch 7, bei dem die Befestigungsstruktur (15; 150) einen zwischen dem Schraubenabschnitt (15; 150) und der Patrize (2; 20) angeordneten Schlüsselansetzabschnitt (17; 120) umfasst.

9. Retentionseinsatz (3; 30) zum Aufschnappen auf einen Einschnappabschnitt (11; 110) einer Patrize (2; 20) gemäss einem der Ansprüche 1 bis 5, der eine Endseite (32; 320) und einen davon abstehenden zumindest teilweise ringförmigen Retentionsrand (31; 310) aufweist, wobei die Endseite (32; 320) und der davon abstehende Retentionsrand (31; 310) eine Fassung (34; 340) bilden, die einen korrespondierend zur Aussenfläche des Einschnappabschnitts (11; 110) der Patrize (2; 20) ausgestalteten konkaven ersten Bereich (312; 3160), einen zur Aufnahme des Kopfendes (13; 130) der Patrize (2; 20) ausgestalteten zweiten Bereich (321; 3210) und einen zwischen dem ersten Bereich (312; 3160) und dem zweiten Bereich (321; 3210) ausgestalteten dritten Bereich (322; 3220) umfasst.

10. Retentionseinsatz (3; 30) nach Anspruch 9, bei dem der zweite Bereich (321; 3210) der Fassung (34; 340) als durchgehende Öffnung in der Endseite (32; 320) ausgestaltet ist.

11. Retentionseinsatz (3; 30) nach Anspruch 9 oder 10, bei dem der dritte Bereich (322; 3220) der Fassung (34; 340) eine konische Innenfläche aufweist, die sich vom ersten Bereich (312; 3160) der Fassung (34; 340) zum zweiten Bereich (321; 3210) der Fassung (34; 340) hin verjüngt.

12. Retentionseinsatz (3; 30) nach einem der Ansprüche 9 bis 11, bei dem der Retentionsrand (31; 310) einen Verlängerungsbereich (314) aufweist, der entgegen dem dritten Bereich (322; 3220) der Fassung (34; 340) an den ersten Bereich (312; 3160) der Fassung (34; 340) anschliesst.

13. Retentionseinsatz (3; 30) nach Anspruch 12, der eine Mittellängsachse (35; 350) umfasst, wobei ein Durchmesser eines maximalen senkrecht zur Mittellängsachse (35; 350) angeordneten Querschnitts des ersten Bereichs (312; 3160) eine Länge von zwischen etwa sechs bis etwa vierzehn, vorzugsweise zwischen etwa acht bis etwa zwölf und insbesondere etwa zehn Mal der Mächtigkeit des Verlängerungsbereichs (314) aufweist.

14. Verbindungseinrichtung, die eine Patrize (2; 20) gemäss einem der Ansprüche 1 bis 5 und einen Retentionseinsatz (3; 30) gemäss einem der Ansprüche 9 bis 13 umfasst, wobei der dritte Bereich (322; 3220) des Retentionseinsatzes (3; 30) zumindest teilweise beabstandet vom Zwischenabschnitt (18; 180) der Patrize (2; 20) angeordnet ist, wenn der Retentionseinsatz (3; 30) auf die Patrize (2; 20) aufgeschnappt ist und keine äussere Kraft auf den Retentionseinsatz (3; 30) und/oder die Patrize (2; 20) wirkt.

## Claims

1. Male piece (2; 20) for reversible and detachable connection of a dental prosthetic construction to a jawbone, said male piece (2; 20) being designed with a fastening structure by means of which the male piece (2; 20) can be fastened onto the jawbone, onto an implant that has been implanted in the jawbone, onto a tooth stump or onto a neighboring tooth, comprising:
a body section (12; 120) (12; 120) having an exterior surface corresponding to a lateral surface of a cylinder, wherein the central axis of the cylinder defines a longitudinal axis (19; 190) of the male piece (2; 20);
a snap-on section (11; 110), which is axially offset with respect to the longitudinal axis (19; 190) of the male piece (2; 20) relative to the body section (12; 120), said snap-on section (11; 110) comprising an exterior surface with a convex curvature along the longitudinal axis (19; 190), which protrudes outward beyond the exterior surface of the body section (12; 120) (12; 120) from the longitudinal axis (19; 190) of the male piece (2; 20); and
a head end (13; 130) which axially finishs the male piece (2; 20) with respect to its longitudinal axis (19; 190),
wherein the snap-on section (11; 110) is arranged closer to the head end (13; 130) than the body section (12; 120), and
wherein a concave intermediate section (18; 180) is arranged between the head end (13; 130) and the convexly curved exterior surface of the snap-on section (11; 110),
**characterized in that** the head end (13; 130) of the male piece (2; 20) is completely convexdly curved and closed.

2. Male piece (2; 20) according to claim 1, wherein the intermediate section (18; 180) of the male piece (2; 20) has a concavely curved exterior surface.

3. Male piece (2; 20) according to claim 1 or 2, wherein the head end (13; 130) of the male piece (2; 20) corresponds to a segment of a spherical surface.

4. Male piece (2; 20) according to claim 3, in which the segment of the spherical surface of the head end (13; 139) has a first radius of curvature (R1) and the convexly curved exterior surface of the snap-on section (11; 110) has a second radius of curvature (R2), wherein the first radius of curvature (R1) is greater than the second radius of curvature (R2).

5. Male piece (2; 20) according to claim 4, in which the first radius of curvature (R1) is approximately two to approximately four times larger than the second radius of curvature (R2) and in particular approximately three times larger.

6. Abutment for connecting a dental prosthetic construction to a jawbone, comprising:
a male piece (2; 20) according to any one of the preceding claims; and
a fastening structure (15; 150), by means of which the abutment can be fastened onto the jawbone or onto an implant that is implanted in the jawbone.

7. Abutment according to claim 6, in which the fastening structure (15; 150) has a screw section (15; 150) extending away from the head end (13; 130) of the male piece (2; 20), an outside thread being formed at least partially on said screw section (15; 150).

8. Abutment according to claim 7, in which the fastening structure (15; 150) comprises a wrench attachment section (17; 120) arranged between the screw section (15; 150) and the male piece (2; 20).

9. Retention insert (3; 30) for snap-on connection on a snap-on section (11; 110) of a male piece (2; 20) according to any one of claims 1 to 5, which has an end side (32; 320) and an at least partially ring-shaped retention edge (31; 310) protruding away from same, wherein the end side (32; 320) and the retention edge (31; 310) protruding away from it form a receptacle (34; 340) which comprises a first concave region (312; 3160) corresponding to the exterior surface of the snap-on section (11; 110) of the male piece (2; 20), a second region (321; 3210) designed to receive the head end (13; 130) of the male piece (2; 20) and a third region (322; 3220) between the first region (312; 3160) and the second region(321; 3210).

10. Retention insert (3; 30) according to claim 9, wherein the second region (321; 3210) of the receptacle (34; 340) is designed as a continuous opening in the end side (32; 320).

11. Retention insert (3; 30) according to claim 9 or 10, wherein the third region (322; 3220) of the receptacle (34; 340) has a conical interior surface which tapers from the first region (312; 3160) of the receptacle (34; 340) to the second region (321; 3210) of the receptacle (34; 340).

12. Retention insert (3; 30) according to any one of claims 9 to 11, wherein the retention edge (31; 310) has an extension region (314), which is connected to the first region (312; 3160) of the receptacle (34; 340) opposite the third region (322; 3220) of the receptacle (34; 340).

13. Retention insert (3; 30) according to claim 12, comprising a central longitudinal axis (35; 350), wherein the diameter of a maximum cross section of the first region (312; 3160) arranged perpendicular to the central longitudinal axis (35; 350) has a length between approximately six and approximately fourteen, preferably between approximately eight and approximately twelve and in particular approximately ten times the thickness of the extension region (314).

14. Connecting device comprising a male piece (2; 20) according to any on of claims 1 to 5 and a retention insert (3; 30) according to any one of claims 9 to 13, wherein the third region (322; 3220) of the retention insert (3; 30) is arranged at least partially at a distance from the intermediate section (18; 180) of the male piece (2; 20) when the retention insert (3; 30) is snapped onto the male piece (2; 20) and no outer force is acting on the retention insert (3; 30) and/or the male piece (2; 20).

## Revendications

1. Pièce mâle (2 ; 20) destinée à raccorder de manière réversible et libérable une structure de prothèse dentaire à un os maxillaire, ladite pièce mâle (2 ; 20) étant conçue avec une structure de fixation au moyen de laquelle la pièce mâle (2 ; 20) peut être fixée sur l'os maxillaire, sur un implant qui a été implanté dans l'os maxillaire, sur un moignon dentaire ou sur une dent voisine, comprenant :
une section de corps (12 ; 120) ayant une surface extérieure correspondant à une surface latérale d'un cylindre, l'axe central du cylindre définissant un axe longitudinal (19 ; 190) de la pièce mâle (2 ; 20) ;
une section d'encliquetage (11 ; 110) qui est axialement décalée par rapport à l'axe longitudinal (19 ; 190) de la pièce mâle (2 ; 20) par rapport à la section de corps (12 ; 120), ladite section d'encliquetage comprenant une surface extérieure avec une courbure convexe le long de l'axe longitudinal (19 ; 190), qui fait saillie vers l'extérieur au-delà de la surface extérieure de la section de corps (12 ; 120) depuis l'axe longitudinal (19 ; 190) de la pièce mâle (2 ; 20) ; et
une extrémité de tête (13; 130) fermant la pièce mâle (2 ; 20) axialement par rapport à son axe longitudinal (19 ; 190),
la section d'encliquetage (11 ; 110) étant agencée plus près de l'extrémité de tête (13 ; 130) que ne l'est la section de corps (12 ; 120) et
une section intermédiaire (18 ; 180) concave qui est agencée entre la surface extérieure de la section d'encliquetage (11 ; 110) ayant une courbure convexe et l'extrémité de tête (13 ; 130), **caractérisée en ce que**
l'extrémité de tête (13 ; 130) de la pièce mâle (2 ; 20) est conçue de manière à présenter une courbure totalement convexe et à être fermée.

2. Pièce mâle (2 ; 20) selon la revendication 1, dans laquelle la section intermédiaire (18 ; 180) de la pièce mâle (2 ; 20) présente une surface extérieure ayant une courbure concave.

3. Pièce mâle (2 ; 20) selon la revendication 1 ou 2, dans laquelle l'extrémité de tête (13 ; 130) de la pièce mâle (2 ; 20) correspond à un segment d'une surface sphérique.

4. Pièce mâle (2 ; 20) selon la revendication 3, dans laquelle le segment de la surface sphérique de l'extrémité de tête présente un premier rayon de courbure (R1) et la surface extérieure de la section d'encliquetage ayant une courbure convexe présente un second rayon de courbure (R2), le premier rayon de courbure (R1) étant plus grand que le second rayon de courbure (R2).

5. Pièce mâle (2 ; 20) selon la revendication 4, dans laquelle le premier rayon de courbure (R1) est approximativement deux à approximativement quatre fois plus grand que le second rayon de courbure (R2) et en particulier approximativement trois fois plus grand.

6. Raccord destiné à raccorder une structure de prothèse dentaire à un os maxillaire, comprenant :
une pièce mâle (2 ; 20) selon l'une des revendications précédentes ; et
une structure de fixation (15 ; 150) au moyen de laquelle le raccord peut être fixé sur l'os maxillaire ou sur un implant qui est implanté dans l'os maxillaire.

7. Raccord selon la revendication 6, dans lequel la structure de fixation (15 ; 150) présente une section de vissage (15 ; 150) s'étendant depuis l'extrémité de tête (13 ; 130) de la pièce mâle (2 ; 20), un filet extérieur étant formé au moins partiellement sur ladite section de vissage.

8. Raccord selon la revendication 7, dans lequel la structure de fixation (15 ; 150) présente une section de fixation de clé (17 ; 120) agencée entre la section de vissage (15 ; 150) et la pièce mâle (2 ; 20).

9. Insert de rétention (3 ; 30) permettant le raccordement par encliquetage sur une section d'encliquetage (11 ; 110) d'une pièce mâle (2 ; 20) selon l'une des revendications 1 à 5, qui présente un côté extrémité (32 ; 320) et un bord de rétention (31 ; 310) au moins partiellement annulaire faisant saillie depuis celui-ci, le côté extrémité (32 ; 320) et le bord de rétention (31 ; 310) faisant saillie depuis celui-ci formant une structure (34 ; 340) qui comprend une première zone concave (312 ; 3160) correspondant à la surface extérieure de la section d'encliquetage (11 ; 110) de la pièce mâle (2 ; 20), une deuxième zone (321 ; 3210) conçue pour recevoir l'extrémité de tête (13 ; 130) de la pièce mâle (2 ; 20) et une troisième zone (322 ; 3220) entre la première zone (312 ; 3160) et la deuxième zone (321 ; 3210).

10. Insert de rétention (3 ; 30) selon la revendication 9, dans lequel la deuxième zone (321 ; 3210) de la structure (34 ; 340) est conçue sous forme d'ouverture traversante dans le côté extrémité (32 ; 320).

11. Insert de rétention (3 ; 30) selon la revendication 9 ou 10, dans lequel la troisième zone (322 ; 3220) de la structure (34 ; 340) présente une surface intérieure conique qui s'amincit depuis la première zone (312 ; 3160) de la structure (34 ; 340) vers la deuxième zone (321 ; 3210) de la structure (34 ; 340).

12. Insert de rétention (3 ; 30) selon l'une des revendications 9 à 11, dans lequel le bord de rétention (31 ; 310) présente une zone d'extension (314) qui est raccordée à la première zone (312 ; 3160) de la structure (34 ; 340) à l'opposé de la troisième zone (322 ; 3220) de la structure (34 ; 340).

13. Insert de rétention (3 ; 30) selon la revendication 12, comprenant un axe longitudinal central (35 ; 350), dans lequel le diamètre de la coupe transversale maximale de la première zone (312 ; 3160) agencée perpendiculairement à l'axe longitudinal central (35 ; 350) présente une longueur comprise entre approximativement six et approximativement quatorze, de préférence entre approximativement huit et approximativement douze et en particulier représentant approximativement dix fois l'épaisseur de la zone d'extension (314).

14. Dispositif de raccordement comprenant une pièce mâle (2 ; 20) selon l'une des revendications 1 à 5 et un insert de rétention (3 ; 30) selon l'une des revendications 9 à 13, dans lequel la troisième zone (322 ; 3220) de l'insert de rétention (3 ; 30) est agencée au moins partiellement à l'écart de la section intermédiaire (18 ; 180) de la pièce mâle (2 ; 20) lorsque l'insert de rétention (3 ; 30) est encliqueté sur la pièce mâle (2 ; 20) et qu'aucune force extérieure n'est exercée sur l'insert de rétention (3 ; 30) et/ou sur la pièce mâle (2 ; 20).
